# EUROPEAN PATENT APPLICATION

(11) **EP 4 715 903 A1**
(43) Date of publication of application: **25.03.2026**
(21) Application number: 25191811.6
(22) Date of filing: 25.07.2025
(51) Int. Cl.: H01M 4/48

(54) **ELECTRODE, SECONDARY BATTERY, BATTERY PACK AND VEHICLE**

(30) Priority: 19.09.2024 JP 2024162114
(71) Applicant: Kabushiki Kaisha Toshiba, Tokyo 105-0023 (JP)
(72) Inventor: Takahashi, Keitaro, Tokyo, 105-0023 (JP); Hoshina, Keigo, Tokyo, 105-0023 (JP); Kano, Kento, Tokyo, 105-0023 (JP); Murata, Yoshiaki, Tokyo, 105-0023 (JP); Harada, Yasuhiro, Tokyo, 105-0023 (JP); Takami, Norio, Tokyo, 105-0023 (JP)
(74) Representative: Hoffmann Eitle

(57) **Abstract**

According to one approach, an electrode (10) includes an active material that includes a metal oxide, and a conductive agent that includes a carbon material. A weight of carbon contained in the electrode (10) is 2.5 parts by weight or less, per 100 parts by weight of the active material. The electrode (10) has lightness L* that satisfies 40 ≤ L* ≤ 85.

## Description

### FIELD

This disclosure relates generally to an electrode, a secondary battery, a battery pack, and a vehicle.

### BACKGROUND

Lithium ion battery, which causes charge-discharge as lithium ion moves between a negative electrode and a positive electrode, and is exemplified by nonaqueous electrolyte battery, has been actively studied as high energy density battery.

An electrode of the secondary battery, such as lithium ion battery, contains an electrode active material that contributes to charge and discharge as a result of insertion and extraction of the lithium ion caused therein, as well as a conductive agent for enhancing electrical conductivity of the electrode. Carbon material has been widely used as the conductive agent to be contained in the electrode.

### BRIEF DESCRIPTION OF DRAWINGS

FIG. 1 is a cross-sectional view schematically showing an example of an electrode according to an approach.
FIG. 2 is a cross-sectional view schematically showing an example of a secondary battery according to the approach.
FIG. 3 is an enlarged cross-sectional view of a part A of the secondary battery shown in FIG. 2.
FIG. 4 is a partially cutaway perspective view schematically showing another example of the secondary battery according to the approach.
FIG. 5 is an enlarged cross-sectional view of a part B of the secondary battery shown in FIG. 4.
FIG. 6 is a perspective view showing another example of a stacked electrode group that includes the electrode of the approach.
FIG. 7 is a perspective view schematically showing an example of a battery module according to an approach.
FIG. 8 is an exploded perspective view schematically showing an example of a battery pack according to an approach.
FIG. 9 is a block diagram showing an example of the battery pack shown in FIG. 8.
FIG. 10 is a partial transparent view showing an example of a vehicle according to an approach.
FIG. 11 is a diagram schematically showing an example of a control system in the vehicle according to the approach.
FIG. 12 is a diagram showing image data of a negative electrode of Example 1 under a scanning electron microscope.

### DETAILED DESCRIPTION

In general, according to one approach, an electrode includes an active material that includes a metal oxide, and a conductive agent that includes a carbon material. A weight of carbon contained in the electrode is 2.5 parts by weight or less, per 100 parts by weight of the active material. The electrode has lightness L* that satisfies 40 ≤ L* ≤ 85.

### (First Approach)

Hereinbelow, approaches are described with reference to the drawings. Common configurations are marked with the same reference numerals throughout the approaches and a repeated description is omitted. Each drawing is a schematic diagram for promoting the description and understanding of the approach, and some shapes, dimensions, ratios, etc. are different from those of the actual device, but these can be appropriately changed in design in view of the following description and known technology.

An electrode that contains a metal oxide such as a niobium-containing oxide as an active material, if used in a secondary battery, will cause volume change ascribed to a charge/discharge reaction of the secondary battery. To make a large amount of conductive agent contained in the electrode would be a possible measure for avoiding damage of an electron conduction path in the electrode caused by the volume change. On the other hand, in order to obtain high energy density in the battery, content of the conductive agent in the electrode is desirably smaller. It is, therefore, difficult to appropriately balance the charge-and-discharge cycle performance with the energy density, only by adjusting the content of the conductive agent in the electrode.

On the other hand, in a case of using a carbon material as the conductive agent, it is considered that the lower the lightness (L*) of the electrode, the better the cycle performance. The electrode with a low lightness (L*), however, needs a large amount of the conductive agent. There is, therefore, a demand for the electrode by which excellent cycle performance is obtainable with a small amount of the conductive agent.

Examples of the carbon material used as the conductive agent include granular carbon material, and fibrous carbon material. These carbon materials desirably have large specific surface area, small particle size, or small fiber diameter. Thus a small amount of blending can contribute to improve conductivity of the electrode. With the carbon material abundantly contained with good dispersibility while entangled with the active material, the electrode will have improved conductivity and lower lightness L*. The lightness L* of the electrode may be applicable as an index of dispersibility of the carbon material, and conductivity of the electrode.

Ideally, the electrode has a low carbon content, in which the carbon material is preferably dispersed so as to cover the active material. With such situation, the energy density of the battery may be increased, and the conductivity of the electrode may be improved. Under conditions that the carbon contained in the electrode is controlled to 2.5 parts by weight or less per 100 parts by weight of the active material, the present inventors have succeeded in materializing an electrode that can greatly improve the battery performance by dispersing the carbon in a state of good dispersion. It was also found that the state of good dispersion is obtainable by controlling the lightness L* of the electrode so as to satisfy 40 ≤ L* ≤ 85.

Moreover, with the weight of carbon contained in the electrode controlled to 2.5 parts by weight or less, per 100 parts by weight of the active material, the carbon material will not be bulky even under increased specific surface area, making it possible to increase the density of the electrode. The energy density of the battery can therefore be improved.

As described above, the electrode of the first approach includes the active material that contains the metal oxide, and the conductive agent that contains the carbon material. The weight of carbon contained in the electrode, per 100 parts by weight of the active material, is 2.5 parts by weight or less. The lightness L* of the electrode satisfies 40 ≤ L* ≤ 85.

The lightness L* herein is measured in compliance with JIS Z8722:2009. The lightness L* of the electrode represents the lightness L* of the surface of the electrode.

The weight of carbon contained in the electrode is measured, for example, by thermogravimetry (TG). The weight of carbon in the conductive agent, measured by the thermogravimetry, may be regarded as the weight of carbon contained in the electrode. Details of the thermogravimetric analysis will be described later.

With the weight of carbon contained in the electrode controlled to 2.5 parts by weight or less, per 100 parts by weight of the active material, the electrode having high density and low porosity will be obtainable. With the lightness L* of the electrode, whose weight of carbon is 2.5 parts by weight or less, controlled to 85 or smaller, uniformity of distribution of the carbon material in the electrode may be increased. Accordingly, not only the conductive agent in contact with the active material, but also the conductive agent in contact with the current collector become adoptable in abundance, thus making it possible to reduce resistance of the electrode. On the other hand, if the lightness L* of the electrode, whose weight of carbon is 2.5 parts by weight or less, were reduced, the carbon material would be unevenly dispersed and existed in the surface of the electrode, thus reducing the abundance ratio of the carbon material inside the electrode. The lower limit of the lightness L* is, therefore, desirably set to 40. With the lightness L* of the electrode, whose weight of carbon is 2.5 parts by weight or less, controlled to 40 or larger, the carbon material may be suppressed from unevenly dispersing, for example, dispersing to the surface of the electrode.

With the lightness L* of the electrode, whose weight of carbon is 2.5 parts by weight or less, controlled to a range of from 40 to 85, it now becomes possible to increase uniformity of distribution of the carbon material in the electrode, while ensuring a high electrode density. As a result, it is possible to provide an electrode that can materialize a secondary battery with high energy density, suppressed gas generation, and excellent charge-discharge rate performance and charge-and-discharge cycle life performance.

The weight of carbon contained in the electrode, per 100 parts by weight of the active material, preferably falls in the range from 0.1 parts by weight to 2.5 parts by weight. A preferred range of the lightness L* of the electrode is from 51 to 80.

Hereinbelow, details of the electrode of the approach will be described.

Such an electrode may be, for example, at least one of a positive electrode, or a negative electrode of the battery. The electrode may include a current collector, and an active material-containing layer. The active material-containing layer may be formed on one surface or both surfaces of the current collector. The active material-containing layer can contain the active material and the conductive agent, and optionally a binder. The active material contains a metal oxide. The conductive agent contains a carbon material. The current collector may include, on its surface, a portion where the active material-containing layer is not formed. This portion can serve as a collector tab.

The metal oxide desirably allows insertion and extraction of alkali metal such as Li, or alkali metal ion. The metal oxide desirably does not contain Li, as synthesized. Moreover, the metal oxide would store Li as a result of a charge-discharge reaction, even if it does not contain Li during the synthesis. The Li to be stored may be irreversible Li. The metal oxide may be a white paticulate matter(white particles). The metal oxide is desirably a white insulating oxide. Examples of the metal oxide include titanium-containing oxide, and niobium-containing oxide. The titanium-containing oxide and the niobium-containing oxide may be white insulating active materials. One kind of the metal oxide may be used as the active material, or a mixture of a plurality of kinds of metal oxides may be used as the active material.

Examples of the titanium-containing oxide include titanium oxide with monoclinic structure, titanium oxide with rutile structure, titanium oxide with anatase structure, and titanium-containing oxide with orthorhombic structure. Each of the titanium oxide with any of these crystal structures may have a composition represented by TiO₂ before charged, and a composition represented by LiₓTiO₂ (x satisfies 0 ≤ x ≤ 1) after charged. Meanwhile, the structure of the titanium oxide with monoclinic structure, before charged, may be represented by TiO₂(B).

Examples of the niobium-containing oxide include niobium pentoxide (Nb₂O₅) and niobium titanium-containing oxide. Examples of the niobium titanium-containing oxide include niobium titanium-containing oxide with monoclinic structure.

Examples of the niobium titanium-containing oxide with monoclinic structure include Nb₂TiO₇, Nb₂Ti₂O₉, Nb₁₀Ti₂O₂₉, Nb₁₄TiO₃₇, and Nb₂₄TiO₆₂. The niobium titanium-containing oxide may be substituted niobium titanium composite oxide, in which at least a part of Nb and/or Ti is substituted with a first element. Examples of the first element include Na, K, Ca, Co, Ni, Si, P, V, Cr, Mo, Ta, Zr, Mn, Fe, Mg, B, Pb, and Al. The substituted niobium titanium composite oxide may contain one kind of first element, or two or more kinds of first elements. The niobium titanium-containing oxide preferably contains Nb₂TiO₇ with monoclinic structure. In this case, an electrode that excels in the capacity and rate performance is obtainable.

Examples of the monoclinic niobium titanium-containing oxide include compounds represented by LiₓTi_{1-y}M1_{y}Nb_{2-z}M2_{z}O_{7+δ}. Where, M1 represents at least one selected from the group consisting of Zr, Si, and Sn. M2 represents at least one selected from the group consisting of V, Ta, and Bi. The individual subscripts in the compositional formula satisfy 0 ≤ x ≤ 5, 0 ≤ y < 1, 0 ≤ z < 2, and -0.3 ≤ δ ≤ 0.3. Specific examples of the monoclinic niobium-titanium oxide include LiₓNb₂TiO₇ (0 ≤ x ≤ 5).

Other examples of the monoclinic niobium-titanium oxide include compounds represented by LiₓTi_{1-y}M3_{y+z}Nb_{2-z}O_{7-δ}. Where, M3 represents at least one selected from the group consisting of Mg, Fe, Ni, Co, W, Ta, and Mo. The individual subscripts in the compositional formula satisfy 0 ≤ x ≤ 5, 0 ≤ y < 1, 0 ≤ z < 2, and -0.3 ≤ δ ≤ 0.3.

The metal oxide can take, for example, a form of primary particle, or a form of secondary particle. The secondary particles may be aggregation of the primary particles. The metal oxide may be a mixture of the primary particles and the secondary particles.

The metal oxide preferably has an average primary particle size of 0.4 µm to 1.5 µm. A more preferred range is from 0.7 µm to 1.5 µm.

The carbon material used for the conductive agent may have, for example, granular form or fibrous form. The conductive agent used herein may be either the fibrous carbon material or the granular carbon material, or may be mixture of the fibrous carbon material and the granular carbon material. Alternatively, a carbon material having a form different from the granular form or fibrous form may be used. For example, a layered carbon material that covers the particles of the active material may be contained in the conductive agent.

The conductive agent preferably contains the fibrous carbon material. The fibrous carbon material can contact with a plurality of active material particles or granular carbon particles. Examples of the fibrous carbon materials include carbon nanotube (CNT), vapor grown carbon fiber (VGCF), and carbon nanofiber (CNF). Examples of CNT include single-wall carbon nanotube (SWCNT), multi-wall carbon nanotube (MWCNT), double or more-walled carbon nanotube (few-wall carbon nanotube (FW-CNT). The fibrous carbon material may be of one kind, or of plural kinds.

The fibrous carbon material preferably has a first portion with a fiber diameter of range from 60 nm to 500 nm, and a second portion with a fiber diameter of range from 1 nm to 15 nm. The first portion and the second portion may be contained in different fibrous carbon materials. Alternatively, the first portion and the second portion may occupy different portions of the same fibrous carbon material.

The first portion is, for example, formed of a bundle in which a plurality of carbon fibers are aggregated. With the first portion formed of the aggregate of carbon fibers, the current efficiency will be improved, thus reducing resistance of the electrode as a whole. With the fiber diameter in the first portion controlled to 60 nm or larger, an effect of reducing the resistance will be fully obtainable. Meanwhile, with the fiber diameter in the first portion controlled to 500 nm or smaller, the aggregate of carbon fibers may be prevented from becoming bulky, thus successfully maintaining high energy density. Therefore, with the fiber diameter of the first portion controlled to a range of from 60 nm to 500 nm, an effect of reducing the resistance will be fully obtainable, while avoiding decrease in the energy density due to the aggregate of carbon fibers contained therein. A more preferred range of the fiber diameter in the first portion is from 60 nm to 200 nm.

The second portion has a smaller fiber diameter than the first portion, and can therefore promote the fibrous carbon material to be distributed over the entire electrode. With the fibrous carbon material distributed over the entire electrode, it becomes possible to reduce a local unreacted part or high resistance part in the electrode. With the fiber diameter in the second portion controlled to a range of from 1 nm to 15 nm, an effect of promoting dispersion of the fibrous carbon material may be enhanced. It is, therefore, possible to reduce the local unreacted part or high resistance part. A more preferred range of the fiber diameter in the second portion is from 2 nm to 10 nm.

The weight of the fibrous carbon material per 100 parts by weight of the active material is preferably controlled to a range of from 0.01 parts by weight to 1 part by weight.

Examples of the granular carbon material include carbon black such as acetylene black; graphite; Ketjen black; and coke. The particle size of the granular carbon material is preferably controlled to 30 nm or smaller. The weight of the granular carbon material per 100 parts by weight of the active material is preferably controlled to 1.5 parts by weight or smaller (including 0 parts by weight). The granular carbon material used herein may be of one kind, or mixture or two or more kinds.

The active material-containing layer may contain a binder. The binder can fill up gaps around the dispersed active material. The binder can also bind the active material and the current collector. Examples of the binder include polytetrafluoroethylene (PTFE), polyvinylidene fluoride (PVdF), fluororubber, styrene-butadiene rubber, polyacrylic acid compound, imide compound, carboxymethyl cellulose (CMC), and salt of CMC. One of them may be used as the binder, or two or more of them may be used in combination as the binder.

In a case where the binder is contained in the active material-containing layer, the weight of the binder, per 100 parts by weight of the active material, is desirably range from 1 part by weight to 5 parts by weight.

For the current collector, usable is a material that is electrochemically stable at a potential at which lithium (Li) is inserted into, and extracted from the active material. The current collector is preferably formed, for example, of aluminum, or an aluminum alloy that contains one or more elements selected from Mg, Ti, Zn, Mn, Fe, Cu, and Si. Thickness of the current collector is preferably range from 5 µm to 20 µm. The current collector having such thickness can balance the strength and weight reduction of the electrode.

Thickness of an aluminum foil or an aluminum alloy foil is preferably range from 5 µm to 20 µm, and more preferably range from 5 µm to 15 µm. Purity of the aluminum foil is preferably 99 wt% or higher. Content of the transition metal such as iron, copper, nickel, or chromium, contained in the aluminum foil or in the aluminum alloy foil, is preferably 1% by weight or less.

Density of the active material-containing layer (exclusive of the current collector) is preferably range from 1.8 g/cm³ to 2.8 g/cm³. Density of the active material-containing layer is more preferably range from 2.1 g/cm³ to 2.7 g/cm³.

### <Manufacturing Method>

The electrode of the approach is manufactured, for example, by a method described below. To a solvent such as pure water, 0.5 wt%, for example, of a fibrous carbon material and 0.5 wt%, for example, of a water-soluble binder such as CMC are added, and the mixture is stirred in a mixer such as homogenizer, for example, under conditions of 40 W for 2 h, to prepare a dispersion of the fibrous carbon material. The dispersion is once allowed to completely dry, to reaggregate the fibrous carbon material. The reaggregated fibrous carbon material is then returned back into the dispersion, thereby preparing a dispersion of the fibrous carbon material having the first portion and the second portion. The dispersion, the active material, the binder, and any other optional conductive agent are mixed in the presence of a solvent, to obtain a slurry. The slurry is applied to the current collector, allowed to dry, and pressed, to obtain the electrode of the approach.

### <Lightness L* of Electrode>

Examples of the sample applicable to lightness measurement include an electrode before being assembled into the battery, or an electrode disassembled and taken out from the battery. When disassembled and taken out from the battery, the electrode is washed with organic solvents so as not to allow lithium salt to remain. First, the electrode is immersed in a cyclic carbonate that can highly solubilize the lithium salt, then immersed in a chain carbonate, and then washed, to fully reduce the residual content of the lithium salt. After immersion, the solvent is removed in vacuo by evacuation.

The lightness L* is measured in compliance with JIS Z8722:2009. A measuring apparatus applicable herein is a spectrophotometer based on spectrophotometric colorimetry, by which reflectance values are measured over the entire wavelength range in the visible region, from which tristimulus values are calculated. The lightness L* of the electrode is obtainable by converting the thus measured tristimulus values into the L*a*b* color space.

Next, observation and measurement of the surface of the electrode, and, methods of measuring the carbon material and the active material contained in the electrode, under a scanning electron microscope (SEM), will be described.

Examples of the sample applicable to the measurement include an electrode before being assembled into the battery, or an electrode disassembled and taken out from the battery. When disassembled and taken out from the battery, the electrode is washed with organic solvents so as not to allow lithium salt to remain. First, the electrode is immersed in a cyclic carbonate that can highly solubilize the lithium salt, then immersed in a chain carbonate, and then washed, to fully reduce the residual content of the lithium salt. After immersion, the solvent is removed in vacuo by evacuation.

### <SEM Observation of Electrode>

Presence of the fibrous carbon material having the first portion and the second portion, and the granular carbon material may be confirmed by observation of the surface of the electrode sample under a SEM. Also the fiber diameter of the first portion, the fiber diameter of the second portion, the particle size of the granular carbon material, and the average primary particle size of the active material are measurable.

A SEM image of the surface of the electrode is acquired, and the acquired SEM image is then binarized. For the binarization, a threshold value is set so that the active material particle is distinguishable from the carbon materials including the fibrous carbon material and the granular carbon material. Software is exemplified by Image-J.

The fibrous carbon material and the granular carbon material have different shapes. The fibrous carbon material has high aspect ratio, which is long enough relative to the fiber diameter, and may have linear portion or curved portion. With the aspect ratio found to be 5 or larger, the material is regarded as the fibrous carbon material. The fibrous carbon material can contact with a plurality of active material particles or granular carbon material particles. The granular carbon material has low aspect ratio, whose irregular shaped particles can exist alone or being chained. With the aspect ratio found to be 3 or smaller, the material is regarded as the granular carbon material. Assuming now the diameter of the granular carbon material as the diameter of a largest circle inscribed in the particle, the diameter of one granular particle can be 800 nm or smaller. The diameter of one granular particle can even be 400 nm or smaller.

### <Fiber Diameter of Fibrous Carbon Material>

The fiber diameter of the fibrous carbon material is estimated from the binarized image. The first portion is a portion where the fiber diameter has a length of 60 nm to 500 nm, as recognized from the binarized image. A portion where the fiber diameter is close to a range of from 60 nm to 500 nm may be detected from the image. The fiber diameter in the first portion is determined by drawing a 50 nm long straight line along one side of the fiber, onto which a perpendicular line is drawn, and an end-to-end distance of the fiber is measured along the perpendicular line, to obtain the fiber diameter. The fibrous carbon material can exist on the active material particles, on the granular particle, and around the particles.

The second portion has the fiber diameter smaller than in the first portion, and preferably has a fiber diameter of from 1 nm to 15 nm. A portion where the fiber diameter is smaller than 60 nm may be detected from the image. Similarly to the measurement of the fiber diameter in the first portion, the fiber diameter in the second portion is determined by drawing a 50 nm long straight line along one side of the fiber, onto which a perpendicular line is drawn, and an end-to-end distance of the fiber is measured along the perpendicular line, to obtain the fiber diameter in the second portion.

### <Particle Size of Granular Carbon Material>

The particle size of the granular carbon material is estimated from the binarized image. The granular carbon is recognized as a portion where the particles size is 30 nm or smaller on the binarized image. A portion where the particle size is close to 30 nm or smaller may be detected from the image. The particle size of the granular carbon material is determined by drawing a 50 nm long straight line along one side of the particle, onto which a perpendicular line is drawn, and an end-to-end distance of the particle is measured along the perpendicular line, to obtain the particle size.

### <Average Primary Particle Size of Active Material>

Thirty primary particles of the active material are picked up from a binarized image. The primary particles are randomly picked up, after excluding fine power or the like, having extremely deviated particle sizes. The particle size of the primary particle is determined by drawing a 50 nm long straight line along one side of the particle, onto which a perpendicular line is drawn, and an end-to-end distance of the particle is measured along the perpendicular line, to obtain the particle size. The thus measured particle sizes are averaged, to obtain the average primary particle size of the active material.

### <Method for Measuring Carbon Material>

The amount of the carbon material contained in the electrode is measurable by thermogravimetry (TG). The electrode is taken out by the same procedures as described regarding the SEM observation. The active material-containing layer of the electrode is peeled off from the current collector to sample the active material-containing layer only, followed by TG. As a result of measurement at a heating rate of from 1°C/min to 3°C/min, two weight loss points will appear in a range from 600°C to 800°C, wherein the loss point at a lower temperature is ascribed to the fibrous carbon, meanwhile the loss point at a higher temperature is ascribed to the granular carbon. From the weight loss thus occurred, the proportion of total carbon may be estimated. Also, the weight proportion of the fibrous carbon material is estimated, by maintaining the temperature for 1 h, at the start point of the decomposition temperature of the carbon material assigned to the lower weight loss point. Also proportion of the granular carbon may be estimated, from the thus estimated proportion of total carbon and the proportion of fibrous carbon material.

### <Composition of Active Material>

Composition of the active material contained in the electrode may be determined by the measurement below.

The composition of the active material contained in the electrode, for example, the composition of the active material contained in the active material-containing layer, may be confirmed by combining elemental analysis under a scanning electron microscope equipped with an energy dispersive X-ray spectrometer (SEM-EDX), X-ray diffractometry (XRD), and inductively coupled plasma (ICP) emission spectroscopy. Shape of the component contained in the active material-containing layer, and composition of the component contained in the active material-containing layer (individual elements from B to U in the periodic table) may be known from SEM-EDX. Elements in the active material-containing layer may be quantified by ICP spectroscopy. Crystal structure of the material contained in the active material-containing layer may be confirmed by XRD.

A cross section of the electrode thus taken out as described above is cut by Ar ion milling. The thus cut cross section is observed under SEM. A specimen is sampled in an inert atmosphere such as argon or nitrogen, so as to avoid the specimen exposed to the air. Several particles are picked up on a SEM image observed at 3000× magnification. In this process, the particles are picked up so as to widen as possible the particle size distribution.

Next, each of the thus picked up particles is subjected to elemental analysis by EDX. This makes it possible to identify the species and amounts of the elements, but exclusive of Li, contained in each particle.

For Li, information on the content thereof in the active material as a whole is obtainable by the ICP emission spectroscopy. The ICP emission spectroscopy follows the procedures below.

From a dried electrode, a powder sample is prepared as follows. The active material-containing layer is peeled off from the current collector, and then ground in a mortar. The thus ground sample is dissolved with an acid, to prepare a liquid sample. The acid applicable herein includes hydrochloric acid, nitric acid, sulfuric acid, and hydrogen fluoride. Concentration of the elements contained in the active material to be measured may be known, by subjecting the liquid sample to the ICP emission spectroscopy.

Crystal structure of the compound, contained in each particle picked up under SEM, may be identified by XRD. The XRD is implemented with use of CuKα radiation as a radiation source, in a measurement range represented by 2θ = 5° to 90°. From the measurement, an X-ray diffraction pattern of the compound contained in the picked up particles is obtainable.

An apparatus for XRD used herein is SmartLab manufactured by Rigaku Corporation. Measurement conditions are as follows.
X-ray source: Cu target
Output: 45 kV, 200 mA
Soller slits: 5° both for incident and receiving systems
Step interval (2θ): 0.02 deg
Scan speed: 20 deg/min
Semiconductor detector: D/teX Ultra 250
Sample plate holder: flat glass sample plate holder (thickness: 0.5 mm)
Measurement range: 5° ≤ 2θ ≤ 90°

In a case of using any other apparatus, a standard Si powder is measured by powder X-ray diffractometry to find conditions under which peak intensity, half-value width, and diffraction angle equivalent to the results obtainable by the aforementioned apparatus will be obtainable, and the sample is measured under such conditions.

The conditions for XRD are determined so that an XRD pattern applicable to the Rietveld analysis may be acquired under such conditions. A specific process for collecting data applicable to the Rietveld analysis include adjusting the step interval to 1/3 to 1/5 of the minimum half width of a diffraction peak, and appropriately controlling the measurement time or the X-ray intensity, so that the maximum intensity reflection will have an intensity, at a peak position, of 5000 cps or larger.

The thus obtained XRD pattern is analyzed by the Rietveld method. In the Rietveld method, a diffraction pattern is calculated from a crystal structure model having been estimated in advance. The estimation of the crystal structure model herein is based on analysis results of EDX and ICP. By fitting all the calculated values and the measured values, parameters (lattice constants, atomic coordinates, occupancy, etc.) related to the crystal structure may be precisely analyzed.

In an exemplary case where a plurality of active materials are contained in the negative electrode, the content of the titanium niobium-containing oxide may be estimated by Rietveld analysis. A fitting parameter S is used as a measure for estimating the degree of coincidence between the observed intensity and the calculated intensity in the Rietveld analysis. The analysis needs to be implemented so as to keep the S smaller than 1.8. It is also necessary to take standard deviation σj into consideration, in order to determine the occupancy of the individual sites. The fitting parameter S and the standard deviation σj defined here are estimated by mathematical formulae described in "Practice of Powder X-Ray Analysis (in Japanese)", first edition (2002), edited by The Discussion Group of X-Ray Analysis, The Japan Society for Analytical Chemistry, written and edited by Izumi Nakai and Fujio Izumi (Asakura Publishing Co., Ltd.), pp.97-115.

XRD may be implemented by measuring an electrode sample directly attached to a glass holder of a wide-angle X-ray diffractometer. In this process, an XRD spectrum is measured in advance for each type of metal foil composing the current collector of the electrode, to preliminarily find where the peak ascribed to the current collector will appear. Also presence or absence of peak ascribed to any additive such as conductive agent or binder is preliminarily determined. If a peak of the current collector and a peak of the active material overlap, it is desirable to measure the active material-containing layer after peeled off from the current collector. This is a means for separating the overlapped peaks, for quantitative measurement of peak intensity. Of course, the operation is omissible if these events are preliminarily recognized.

For example, if the particles observed by the preceding SEM-EDX has been known to contain Ti, Nb, and O, and if an X-ray diffraction pattern attributable to the monoclinic form has been obtained by the preceding XRD from the electrode to be measured, it can be understood that the monoclinic titanium niobium-containing oxide is present in the active material to be measured. If EDX demonstrates that some particles with largely different Ti or Nb content is contained, there is a possibility that a plurality of active materials are contained. The amount of the element contained in the active material in the electrode may be determined by ICP emission spectroscopy, according to the aforementioned procedures.

The content of the active material in the active material-containing layer may be estimated by the method below.

The electrode taken out from the battery according to the aforementioned procedures is washed and dried, the active material-containing layer is then peeled off from the current collector, and ground in a mortar. The thus ground sample is placed on a glass sample plate, and the ground sample is leveled off to have the same level surface as the level surface of the glass sample plate. A Si standard sample may also be added to correct the peak position.

The powder sample filled in the glass sample plate is subjected to XRD and the Rietveld analysis under the aforementioned conditions. The powder sample is also subjected to SEM-EDX and the ICP measurement, according to the aforementioned procedures. By taking the results of XRD, SEM-EDX, and the ICP measurement into account, the kind and content of the active material may be estimated.

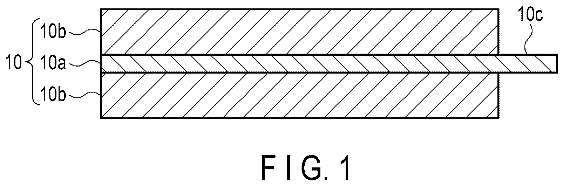

FIG. 1 shows an example of the electrode according to the approach. FIG. 1 schematically illustrates a cross section of the electrode.

An exemplified electrode 10 includes a current collector 10a, and active material-containing layers 10b provided on both surfaces thereof on the front and back. The current collector 10a has a part where the active material-containing layer 10b is not provided neither on the front nor the back, allowing such part to serve as a current collector tab 10c.

In the electrode according to the first approach, the weight of carbon, per 100 parts by weight of the active material, is 2.5 parts by weight or less. The lightness L* of the electrode satisfies 40 ≤ L* ≤ 85. Accordingly, it is possible to provide the electrode that can materialize a secondary battery with high energy density, suppressed gas generation, excellent charge-discharge rate performance and charge-and-discharge cycle life performance.

### (Second Approach)

According to a second approach, a secondary battery that includes the positive electrode, the negative electrode, and an electrolyte is provided. The secondary battery includes the electrode according to the first approach, as at least one of the positive electrode or the negative electrode. In a case where the electrode according to the first approach is contained as the negative electrode, the positive electrode may be an electrode different from that in the first approach.

The secondary battery may further include a separator provided between the positive electrode and the negative electrode. The negative electrode, the positive electrode, and the separator can constitute an electrode group. The electrolyte can be retained in the electrode group.

Such secondary battery may further include a container member that houses the electrode group and the electrolyte.

Such secondary battery may further include a negative electrode terminal electrically connected to the negative electrode, and a positive electrode terminal electrically connected to the positive electrode.

The secondary battery may be, for example, a lithium secondary battery. The secondary battery includes a nonaqueous electrolyte secondary battery that contains a nonaqueous electrolyte.

Hereinbelow, the positive electrode, the electrolyte, the separator, the container member, the negative electrode terminal, and the positive electrode terminal of a secondary battery with use of the electrode of the first approach as the negative electrode will be described in detail.

### 1) Positive Electrode

The positive electrode includes a positive electrode current collector; and a positive electrode active material-containing layer supported by, or in contact with one surface (one main surface) or both surfaces of the current collector, and contains the positive electrode active material. The positive electrode active material-containing layer may contain the binder and/or the conductive agent.

Examples of the positive electrode active material include LiₓM_{y}O₂ (0 < x ≤ 1, 0 < y ≤ 1, M is, for example, Mn), LiₓM_{2y}O₄ (0 < x ≤ 1, 0 < y ≤ 1, M is, for example, Mn), lithium phosphate having olivine structure (for example, LiₓM_{y}PO₄ (M is at least one element selected from the group consisting of Mn, Ni, Co, and Fe, 0<x ≤ 1.1, and 0.8 ≤ y ≤ 1.1), LiₓFePO₄ (0 < x ≤ 1.1), LiₓFe_{1-y}Mn_{y}PO₄ (0 < x ≤ 1.1, 0 ≤ y ≤ 1), LiₓCoPO₄ (0 < x ≤ 1.1), LiₓMnPO₄ (0 < x ≤ 1.1)), lithium nickel cobalt composite oxide (for example, LiₓNi₁₋ₐCoₐO₂, 0 < x ≤ 1, 0 < a ≤ 1), lithium cobalt composite oxide (for example, LiₓCoO₂, 0 < x ≤ 1), lithium nickel manganese cobalt composite oxide (for example, LiₓNi_{1-a-b}MnₐCo_{b}O₂, 0 < x ≤ 1, 0 < 1-a-b < 1, 0 < a < 1, 0 < b < 1), lithium manganese cobalt composite oxide (for example, LiₓMn₁₋ₐCoₐO₂, 0 < x ≤ 1, 0 < a < 1), spinel type lithium manganese nickel composite oxide (for example, LiₓMn₂₋ₐNiₐO₄, 0 < x ≤ 1, 0 < a < 2), fluorinated iron sulfate having a tavorite structure (for example, LiₓM_{y}SO₄F (0 < x ≤ 1, 0 < y ≤ 1, M is at least one of Fe or Mn), and LiₓFe₁₋ₐMnₐSO₄F (0 < x ≤ 1, 0 < a ≤ 1). The positive electrode active material may be of one kind, or of two or more kinds.

The positive electrode active material can achieve a high voltage of 4 V or higher. The lithium nickel manganese cobalt composite oxide can achieve a high voltage of 4 V or higher, and can increase the energy density of the positive electrode.

The positive electrode active material particles may be in the form of primary particles or secondary particles. The secondary particles may be an aggregation of the primary particles. Alternatively, the primary particles and the secondary particles may be commingled.

On the surface of the particles of the positive electrode active material, at least one or more elements selected from Mg, Al, Ti, Nb, Sn, Zr, Ba, B, N, and C is preferably present. This makes it possible to suppress an oxidative decomposition reaction of the nonaqueous electrolyte in a high-temperature environment, and thus to suppress the resistance from increasing. High-temperature life performance may therefore be improved.

The positive electrode current collector may contain at least one of aluminum or aluminum alloy. Examples of the positive electrode current collector include aluminum foil and aluminum alloy foil. The positive electrode current collector may have a thickness of 20 µm or smaller. A more preferred range is 15 µm or smaller. Purity of the aluminum foil is preferably 99 wt% or higher. Content of the transition metal such as iron, copper, nickel, or chromium, contained in the aluminum foil or in the aluminum alloy foil, is preferably 1% by weight or less.

The positive electrode active material-containing layer may also contain the conductive agent. Examples of the conductive agent include acetylene black, carbon black, and graphite. The conductive agent may be of one kind, or of two or more kinds.

The positive electrode active material-containing layer may also contain the binder. Examples of the binder include polytetrafluoroethylene (PTFE), polyvinylidene fluoride (PVdF), fluororubber, and acrylic materials. The binder may be of one kind, or of two or more kinds.

Compound ratios of the positive electrode active material, the conductive agent, and the binder preferably range from 80 to 95 wt% for the positive electrode active material, from 3 to 19 wt% for the conductive agent, and from 1 to 7 wt% for the binder.

The positive electrode active material-containing layer preferably has a specific surface area, measured by the BET method, in the range from 0.1 to 2 m²/g. The positive electrode active material-containing layer may be porous.

The positive electrode can be manufactured, for example, by suspending the positive electrode active material, the conductive agent, and the binder in an appropriate solvent, and by applying the suspension to the positive electrode current collector, followed by drying and pressing.

### 2) Electrolyte

As the electrolyte, for example, a liquid nonaqueous electrolyte or a gel nonaqueous electrolyte can be used. The liquid nonaqueous electrolyte is prepared by dissolving an electrolyte salt as a solute in an organic solvent. Concentration of the electrolyte salt is preferably 0.5 mol/L or higher and 2.5 mol/L or lower.

Examples of the electrolyte salt include lithium salts such as lithium perchlorate (LiClO₄), lithium hexafluorophosphate (LiPF₆), lithium tetrafluoroborate (LiBF₄), lithium arsenic hexafluoride (LiAsF₆), lithium trifluoromethanesulfonate (LiCF₃SO₃), and lithium bis(trifluoromethylsulfonyl)imide (LiN(CF₃SO₂)₂), and mixtures of these compounds. The electrolyte salt is preferably hardly oxidized even at a high potential, and is most preferably LiPF₆.

Examples of the organic solvent include cyclic carbonates such as propylene carbonate (PC), ethylene carbonate (EC), or vinylene carbonate (VC); chain carbonates such as diethyl carbonate (DEC), dimethyl carbonate (DMC), or methyl ethyl carbonate (MEC); cyclic ethers such as tetrahydrofuran (THF), 2-methyltetrahydrofuran (2MeTHF), or dioxolane (DOX); chain ethers such as dimethoxyethane (DME) or diethoxyethane (DEE); and γ-butyrolactone (GBL); acetonitrile (AN); and sulfolane (SL). These organic solvents can each be used alone or as a mixed solvent.

The gel nonaqueous electrolyte is prepared by compositing a liquid nonaqueous electrolyte and a polymer material. Examples of the polymer material include polyvinylidene fluoride (PVdF), polyacrylonitrile (PAN), polyethylene oxide (PEO), and mixtures of these materials.

Another nonaqueous electrolyte other than the liquid nonaqueous electrolyte or the gel nonaqueous electrolyte can be used. Examples of the another nonaqueous electrolyte include room-temperature molten salt (ionic melt) containing lithium ion, polymer solid electrolyte, inorganic solid electrolyte, and the like.

The room-temperature molten salt (ionic melt) refers to a compound that can exist as a liquid at room temperature (for example, a range of from 15°C to 25°C), from among organic salts based on combinations of organic cation and anion. The room-temperature molten salt includes room-temperature molten salt that exists as liquid on its own, room-temperature molten salt that becomes liquid by being mixed with an electrolyte salt, room-temperature molten salt that becomes a liquid by being dissolved in organic solvent, or mixtures of these molten salts. In general, the melting point of a room-temperature molten salt used for the secondary battery is 25°C or lower. The organic cation generally has a quaternary ammonium skeleton.

The polymer solid electrolyte is prepared by dissolving the electrolyte salt in the polymer material, followed by solidification.

Inorganic solid electrolyte is a solid substance having Li ion conductivity. The expression "having Li ion conductivity" herein means that a lithium ion conductivity of 1 × 10⁻⁶ S/cm or larger is exhibited at 25°C. Examples of the inorganic solid electrolyte include oxide-based solid electrolytes, and sulfide-based solid electrolytes. Specific examples of the inorganic solid electrolyte are as follows.

As the oxide-based solid electrolyte, a lithium phosphate solid electrolyte having the NASICON (sodium (Na) super ionic conductor) structure, and represented by the general formula Li₁₊ₓMα₂(PO₄)₃ is preferably used. Mα in the above general formula is, for example, one or more element selected from the group consisting of titanium (Ti), germanium (Ge), strontium (Sr), zirconium (Zr), tin (Sn), aluminum (Al), and calcium (Ca). The subscript x is in the range given by 0 ≤ x ≤ 2.

Specific examples of the lithium phosphate solid electrolyte having the NASICON structure include LATP compound represented by Li₁₊ₓAlₓTi₂₋ₓ(PO₄)₃, with 0.1 ≤ x ≤ 0.5; compound represented by Li₁₊ₓAl_{y}Mβ_{2-y}(PO₄)₃, where Mβ is one or more elements selected from the group consisting of Ti, Ge, Sr, Zr, Sn, and Ca, with 0 ≤ x ≤ 1 and 0 ≤ y ≤ 1; compound represented by Li₁₊ₓAlₓGe₂₋ₓ(PO₄)₃, with 0 ≤ x ≤ 2; compound represented by Li₁₊ₓAlₓZr₂₋ₓ(PO₄)₃, with 0 ≤ x ≤ 2; compound represented by Li_{1+x+y}AlₓMγ₂₋ₓSi_{y}P_{3-y}O₁₂, where Mγ is one or more elements selected from the group consisting of Ti and Ge, with 0 < x ≤ 2 and 0 ≤ y < 3; and compound represented by Li₁₊₂ₓZr₁₋ₓCaₓ(PO₄)₃, with 0 ≤ x < 1.

Besides the aforementioned lithium phosphate solid electrolyte, examples of the oxide-based solid electrolyte include amorphous LiPON compound represented by LiₓPO_{y}N_{z}, with 2.6 ≤ x ≤ 3.5, 1.9 ≤ y ≤ 3.8, and 0.1 ≤ z ≤ 1.3 (for example, Li_{2.9}PO_{3.3}N_{0.46}); compound represented by La₅₊ₓAₓLa₃₋ₓMδ₂O₁₂ having a garnet structure, where A is one or more elements selected from the group consisting of Ca, Sr, and Ba, Mδ is one or more elements selected from the group consisting of Nb and Ta, with 0 ≤ x ≤ 0.5; compound represented by Li₃Mo₂₋ₓL₂O₁₂, where Mδ is one or more elements selected from the group consisting of Nb and Ta, L may contain Zr, with 0 ≤ x ≤ 0.5; compound represented by Li₇₋₃ₓAlₓLa₃Zr₃O₁₂, with 0 ≤ x ≤ 0.5; LLZ compound represented by Li₅₊ₓLa₃Mδ₂₋ₓZrₓO₁₂, where Mδ is one or more elements selected from the group consisting of Nb and Ta, with 0 ≤ x ≤ 2 (for example, Li₇La₃Zr₂O₁₂); and compound having a perovskite structure, represented by La_{2/3-x}LiₓTiO₃, with 0.3 ≤ x ≤ 0.7.

One or more of the aforementioned compounds can be used as the solid electrolyte. Two or more of the aforementioned solid electrolytes may be used.

### 3) Separator

The separator is formed, for example, of porous film or synthetic resin nonwoven fabric that contains polyethylene (PE), polypropylene (PP), cellulose, or polyvinylidene fluoride (PVdF). From the viewpoint of safety, it is preferred to use a porous film formed of polyethylene or polypropylene. This is because these porous films can melt at a certain temperature to shut off electric current.

### 4) Container Member

Examples of the container member include a container formed of laminate film, and a metal container.

The thickness of the laminate film is, for example, 0.5 mm or smaller, and preferably 0.2 mm or smaller.

As the laminate film, a multilayer film having a plurality of resin layers and metal layer interposed in between may be used. The resin layer may contain, for example, a polymer material such as polypropylene (PP), polyethylene (PE), nylon, or polyethylene terephthalate (PET). The metal layer is preferably formed of the aluminum foil or the aluminum alloy foil, for weight reduction. The laminate film may be formed conforming to the shape of the container member, by sealing under thermal fusion.

The thickness of the wall of the metal container is, for example, 1 mm or smaller, more preferably 0.5 mm or smaller, and even more preferably 0.2 mm or smaller.

The metal container is, for example, formed of aluminum, or aluminum alloy. The aluminum alloy preferably contains an element such as magnesium, zinc, or silicon. The aluminum alloy, if containing a transition metal such as iron, copper, nickel, or chromium, preferably has the content thereof preferably controlled to 100 mass ppm or less.

Shape of the container member is not specifically limited. The shape of the container member may be, for example, a flat shape (thin type), square shape, cylindrical shape, coin shape, or button shape. The container member may be appropriately selectable according to the size or application of the battery.

### 5) Negative Electrode Terminal

The negative electrode terminal may be formed of a material which is electrochemically stable at the Li insertion/extraction potential of the aforementioned negative electrode active material, and has conductivity. More specifically, examples of the material of the negative electrode terminal include copper, nickel, stainless steel, aluminum, and aluminum alloy that contains at least one element selected from the group consisting of Mg, Ti, Zn, Mn, Fe, Cu, and Si. As the material for the negative electrode terminal, aluminum or an aluminum alloy is preferably used. The negative electrode terminal is preferably formed of the same material as the negative electrode current collector, in view of reducing contact resistance with the negative electrode current collector.

### 6) Positive Electrode Terminal

The positive electrode terminal can be formed by using a material that is electrically stable in the potential range (vs. Li/Li⁺) of 3 V or more and 4.5 V or less relative to the oxidation-reduction potential of lithium, and has conductivity. Examples of the material of the positive electrode terminal include aluminum, or an aluminum alloy that contains at least one element selected from the group consisting of Mg, Ti, Zn, Mn, Fe, Cu, and Si. The positive electrode terminal is preferably formed of the same material as the positive electrode current collector, in view of reducing the contact resistance with the positive electrode current collector.

Next, an example of the secondary battery according to the approach is described more specifically with reference to the drawing.

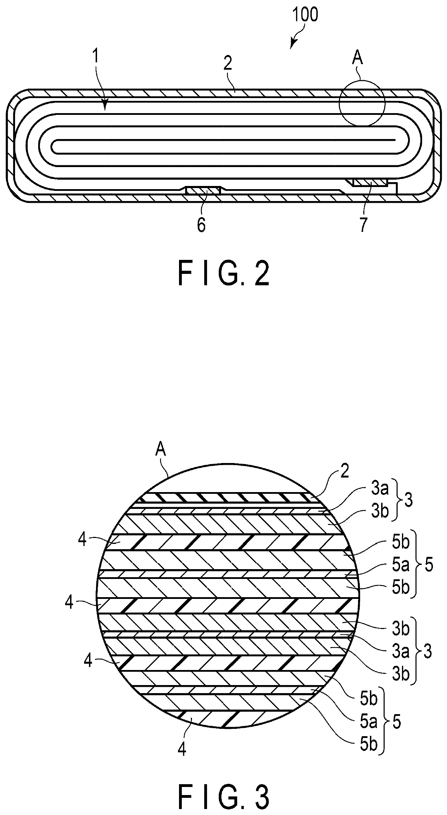

FIG. 2 is a cross-sectional view schematically showing an example of a secondary battery according to the approach. FIG. 3 is an enlarged cross-sectional view of part A of the secondary battery shown in FIG. 2.

A secondary battery 100 shown in FIGS. 2 and 3 includes a bag-shaped container member 2 shown in FIG. 2, an electrode group 1 shown in FIGS. 2 and 3, and an electrolyte (not shown). The electrode group 1 and the electrolyte are housed in the bag-shaped container member 2. The electrolyte (not shown) is held in the electrode group 1.

The bag-shaped container member 2 includes a laminate film including two resin layers and a metal layer interposed therebetween.

As shown in FIG. 2, the electrode group 1 is a flat wound electrode group. As shown in FIG. 3, the flat wound electrode group 1 includes a negative electrode 3, a separator 4, and a positive electrode 5. The separator 4 is interposed between the negative electrode 3 and the positive electrode 5.

The negative electrode 3 includes a negative electrode current collector 3a and a negative electrode active material-containing layer 3b. In the portion of the negative electrode 3 located in the outermost shell of the wound electrode group 1, as shown in FIG. 3, the negative electrode active material-containing layer 3b is formed only on the inner surface side of the negative electrode current collector 3a. In the other part of the negative electrode 3, the negative electrode active material-containing layer 3b is formed on both surfaces of the negative electrode current collector 3a.

The positive electrode 5 includes a positive electrode current collector 5a and positive electrode active material-containing layers 5b formed on both sides of the positive electrode current collector 5a.

As shown in FIG. 2, the negative electrode terminal 6 and the positive electrode terminal 7 are located near the outer peripheral end of the wound electrode group 1. The negative electrode terminal 6 is connected to a portion located at the outermost shell of the negative electrode current collector 3a. The positive electrode terminal 7 is connected to a portion located at the outermost shell of the positive electrode current collector 5a. The negative electrode terminal 6 and the positive electrode terminal 7 extend to the outside from the opening of the bag-shaped container member 2. A thermoplastic resin layer is provided on the inner surface of the bag-shaped container member 2, and the opening is closed by thermally fusing the thermoplastic resin layer.

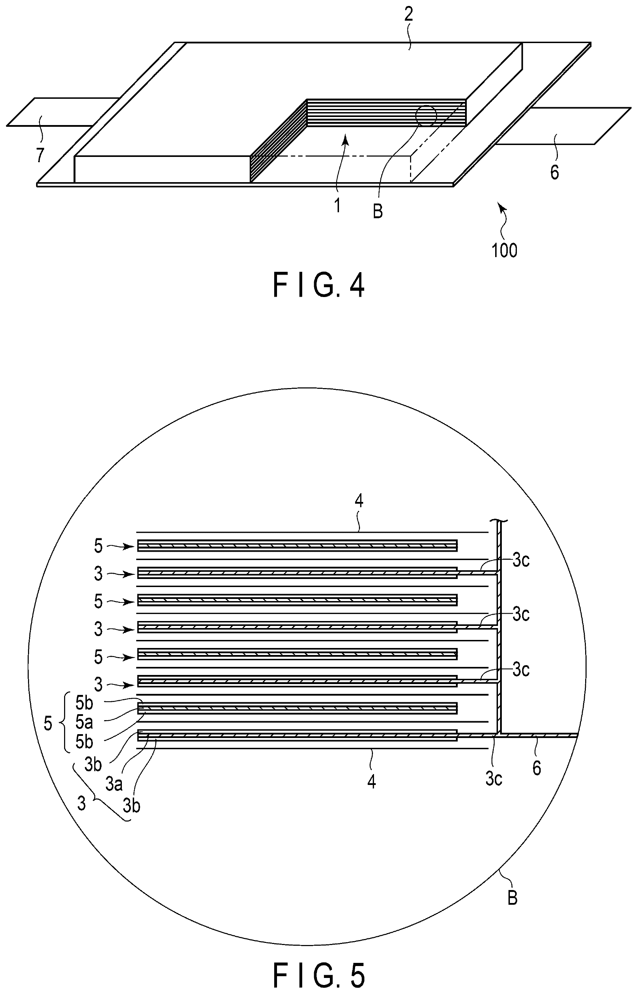

The secondary battery according to the approach is not limited to the secondary battery of the configuration shown in FIGS. 2 and 3, and may be, for example, a battery of the configuration shown in FIGS. 4 and 5.

FIG. 4 is a partially cutaway perspective view schematically showing another example of the secondary battery according to the approach. FIG. 5 is an enlarged cross-sectional view of part B of the secondary battery shown in FIG. 4.

A secondary battery 100 shown in FIGS. 4 and 5 includes an electrode group 1 shown in FIGS. 4 and 5, a container member 2 shown in FIG. 4, and an electrolyte (not shown). The electrode group 1 and the electrolyte are housed in the container member 2. The electrolyte is held in the electrode group 1.

The container member 2 includes a laminate film including two resin layers and a metal layer interposed therebetween.

As shown in FIG. 5, the electrode group 1 is a stacked electrode group. The stacked electrode group 1 has a structure in which the negative electrode 3 and the positive electrode 5 are alternately stacked with the separator 4 interposed therebetween.

The electrode group 1 includes a plurality of negative electrodes 3. Each of the plurality of negative electrodes 3 includes a negative electrode current collector 3a and a negative electrode active material-containing layer 3b supported on both surfaces of the negative electrode current collector 3a. The electrode group 1 includes a plurality of positive electrodes 5. Each of the plurality of positive electrodes 5 includes a positive electrode current collector 5a and positive electrode active material-containing layers 5b supported on both surfaces of the positive electrode current collector 5a.

The negative electrode current collector 3a of each negative electrode 3 includes, on one side thereof, a portion 3c where the negative electrode active material-containing layer 3b is not supported on any surface. This portion 3c serves as a negative electrode tab. As shown in FIG. 5, the portion 3c serving as the negative electrode tab does not overlap with the positive electrode 5. The plurality of negative electrode tabs 3c are electrically connected to a belt-shaped negative electrode terminal 6. The tip of the belt-shaped negative electrode terminal 6 is drawn out of the container member 2.

Although not shown, the positive electrode current collector 5a of each positive electrode 5 includes, on one side thereof, a portion where the positive electrode active material-containing layer 5b is not supported on any surface. This portion serves as a positive electrode tab. The positive electrode tab does not overlap with the negative electrode 3 in a similar manner to the negative electrode tab 3c. The positive electrode tab is located on the opposite side of the electrode group 1 with respect to the negative electrode tab 3c. The positive electrode tab is electrically connected to the belt-shaped positive electrode terminal 7. The tip of the belt-shaped positive electrode terminal 7 is located on the opposite side to the negative electrode terminal 6, and is drawn out of the container member 2.

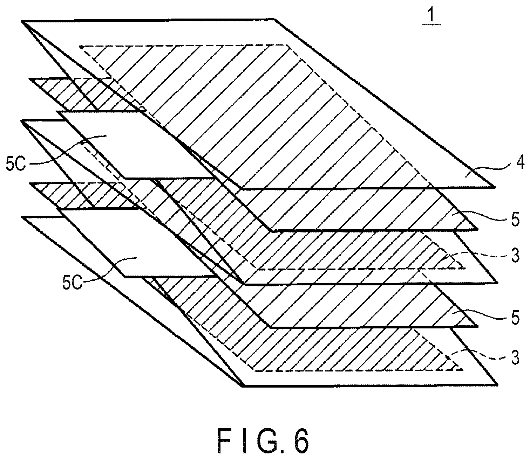

The stacked electrode group is not limited to those having the structure illustrated in FIG. 5. Another example of the stacked electrode group 1 is shown in FIG. 6. The positive electrode 5, the negative electrode 3, the positive electrode 5, and the negative electrode 3 are arranged in this order so as to be interposed between the separators 4 having been accordion-folded. Positive electrode tabs 5c protrude from one long side portion of the accordion-folded separator 4. Meanwhile, negative electrode tabs (not illustrated) protrude from the other long side of the accordion-folded separator 4. The order of the positive electrode 5 and the negative electrode 3 is not limited to as illustrated in FIG. 6, alternatively allowing the order of negative electrode 3 and the positive electrode 5.

The secondary battery according to the second approach includes the electrode according to the first approach. Accordingly, such secondary battery has high energy density and suppressed gas generation, and excels in charge-discharge rate performance and charge-and-discharge cycle life performance.

### (Third Approach)

According to a third approach, a battery module is provided. The battery module according to the third approach includes a plurality of secondary batteries according to the second approach.

In the battery module according to the third approach, the single batteries may be electrically connected in series or in parallel, or may be arranged in combination of series connection and parallel connection.

Next, an example of the battery module according to the approach is described with reference to the drawing.

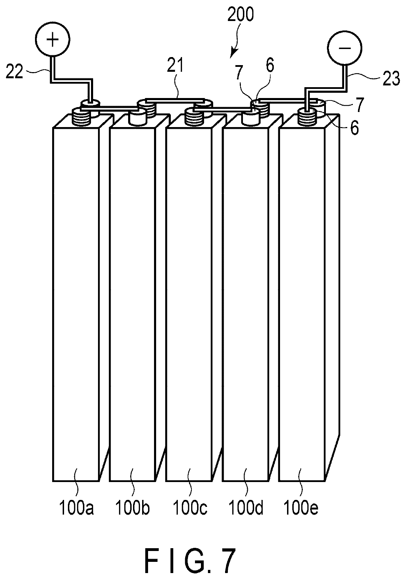

FIG. 7 is a perspective view schematically showing an example of a battery module according to the approach. A battery module 200 shown in FIG. 7 includes five single batteries 100a to 100e, four bus bars 21, a positive electrode lead 22, and a negative electrode lead 23. Each of the five single batteries 100a to 100e is the secondary battery according to the third approach.

The bus bar 21 connects, for example, a negative electrode terminal 6 of one single battery 100a and a positive electrode terminal 7 of the adjacent single battery 100b. In this way, the five single batteries 100 are connected in series by the four bus bars 21. That is, the battery module 200 of FIG. 7 is a 5-series battery module.

As shown in FIG. 7, the positive electrode terminal 7 of, among the five single batteries 100a to 100e, the single battery 100a located at the left end is electrically connected to the positive electrode lead 22 for external connection. The negative electrode terminal 6 of, among the five single batteries 100a to 100e, the single battery 100e located at the right end is electrically connected to the negative electrode lead 23 for external connection.

The battery module according to the third approach includes the secondary battery according to the second approach. Accordingly, such battery module has high energy density and suppressed gas generation, and excels in charge-discharge rate performance and charge-and-discharge cycle life performance.

### (Fourth Approach)

According to a fourth approach, a battery pack is provided. The battery pack includes the battery module according to the third approach. The battery pack may include a single secondary battery according to the second approach instead of the battery module according to the third approach.

The battery pack according to the fourth approach may further include a protective circuit. The protective circuit has a function of controlling charging and discharging of the secondary battery. Alternatively, a circuit included in a device using the battery pack as a power source (for example, an electronic device, an automobile, or the like) may be used as a protective circuit of the battery pack.

The battery pack according to the fourth approach may further include an external power distribution terminal. The external power distribution terminal is configured to output a current from the secondary battery to the outside and/or to input a current from the outside to the secondary battery. In other words, at the time of using the battery pack as a power source, a current is supplied to the outside through the external power distribution terminal. At the time of charging the battery pack, a charge current (including regenerative energy of power of an automobile or the like) is supplied to the battery pack through the external power distribution terminal.

Next, an example of the battery pack according to the approach is described with reference to the drawing.

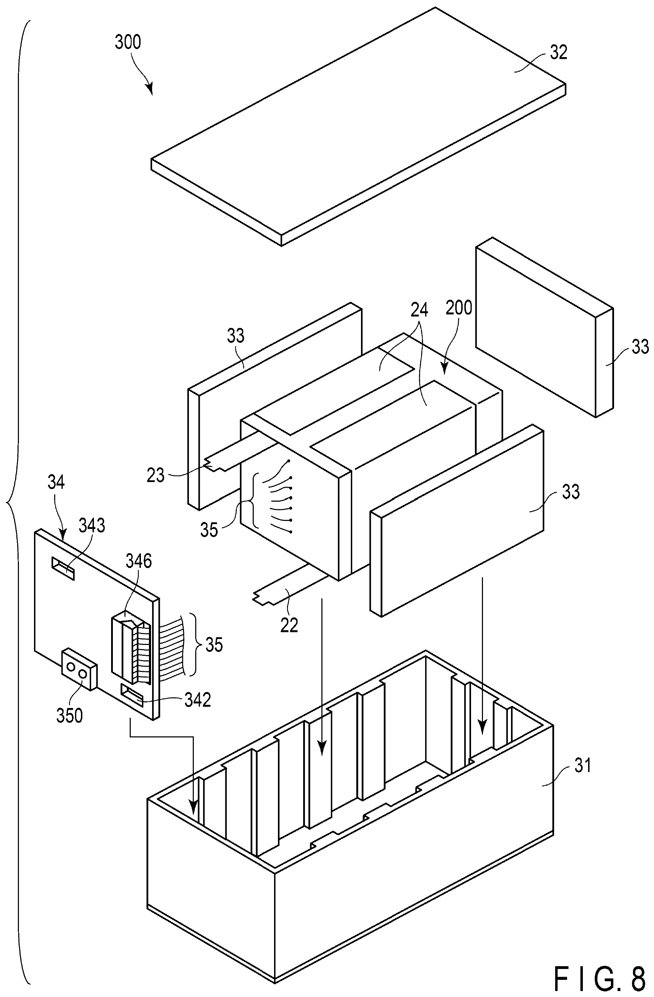

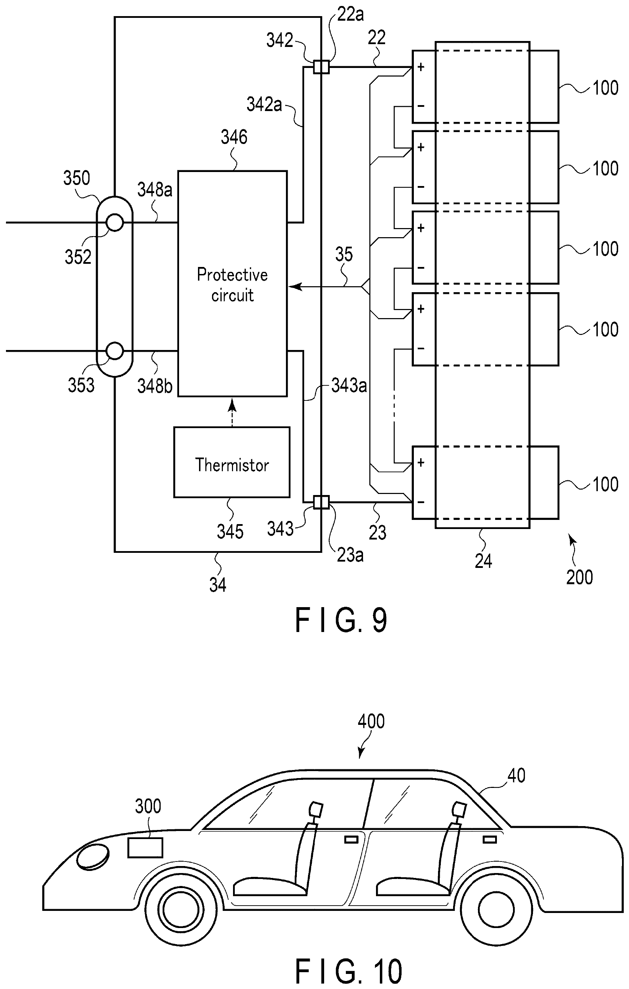

FIG. 8 is an exploded perspective view schematically showing an example of a battery pack. FIG. 9 is a block diagram showing an example of an electric circuit of the battery pack shown in FIG. 8.

A battery pack 300 shown in FIGS. 8 and 9 includes a housing container 31, a lid 32, protective sheets 33, a battery module 200, a printed wiring board 34, wiring lines 35, and a not-illustrated insulating plate.

The housing container 31 shown in FIG. 8 is a bottomed square container having a rectangular bottom surface. The housing container 31 is configured to be able to house the protective sheets 33, the battery module 200, the printed wiring board 34, and the wiring lines 35. The lid 32 has a rectangular shape. The lid 32 covers the housing container 31 to house the battery module 200, etc. Although not illustrated, the housing container 31 and the lid 32 are each provided with an opening, a connection terminal, or the like for connection to an external device or the like.

The battery module 200 includes a plurality of single batteries 100, a positive electrode lead 22, a negative electrode lead 23, and an adhesive tape 24.

At least one of the single batteries 100 is the secondary battery according to the third approach. The single batteries 100 are electrically connected in series as shown in FIG. 9. The single batteries 100 may be electrically connected in parallel, or may be connected in combination of series connection and parallel connection. If the single batteries 100 are connected in parallel, the battery capacity is increased as compared to the case where they are connected in series.

The adhesive tape 24 fastens the single batteries 100. Instead of the adhesive tape 24, a heat-shrinkable tape may be used to fix the single batteries 100. In this case, protective sheets 33 are placed on both side surfaces of the battery module 200, the heat-shrinkable tape is wound around, and then the heat-shrinkable tape is heat-shrunk to bind the single batteries 100.

One end of the positive electrode lead 22 is electrically connected to the battery module 200. The one end of the positive electrode lead 22 is electrically connected to the positive electrode of one or more single batteries 100. One end of the negative electrode lead 23 is electrically connected to the battery module 200. The one end of the negative electrode lead 23 is electrically connected to the negative electrode of one or more single batteries 100.

The printed wiring board 34 is installed along one surface in the short side direction among the inner side surfaces of the housing container 31. The printed wiring board 34 includes a positive electrode connector 342, a negative electrode connector 343, a thermistor 345, a protective circuit 346, wiring lines 342a and 343a, an external power distribution terminal 350, a plus side wiring line (positive side wiring line) 348a, and a minus side wiring line (negative side wiring line) 348b. One main surface of the printed wiring board 34 faces one side surface of the battery module 200. A not-illustrated insulating plate is interposed between the printed wiring board 34 and the battery module 200.

The other end 22a of the positive electrode lead 22 is electrically connected to the positive electrode connector 342. The other end 23a of the negative electrode lead 23 is electrically connected to the negative electrode connector 343.

The thermistor 345 is fixed to one main surface of the printed wiring board 34. The thermistor 345 detects the temperature of each single battery 100, and transmits a detection signal of temperature to the protective circuit 346.

The external power distribution terminal 350 is fixed to the other main surface of the printed wiring board 34. The external power distribution terminal 350 is electrically connected to a device existing outside the battery pack 300. The external power distribution terminal 350 includes a positive side terminal 352 and a negative side terminal 353.

The protective circuit 346 is fixed to the other main surface of the printed wiring board 34. The protective circuit 346 is connected to the positive side terminal 352 via the plus wiring line 348a. The protective circuit 346 is connected to the negative side terminal 353 via the minus wiring line 348b. The protective circuit 346 is further electrically connected to the positive electrode connector 342 via the wiring line 342a. The protective circuit 346 is electrically connected to the negative electrode connector 343 via the wiring line 343a. The protective circuit 346 is further electrically connected to each single battery 100 via the wiring line 35.

The protective sheets 33 are placed on both inner side surfaces in the long side direction of the housing container 31 and on an inner side surface in the short side direction facing the printed wiring board 34 via the battery module 200. The protective sheet 33 contains, for example, resin or rubber.

The protective circuit 346 controls the charging and discharging of the single batteries 100. In addition, the protective circuit 346 interrupts the electrical connection between the protective circuit 346 and the external power distribution terminal 350 (the positive side terminal 352 and the negative side terminal 353) for power distribution to an external device based of a detection signal transmitted from the thermistor 345 or a detection signal transmitted from each single battery 100 or the battery module 200.

Examples of the detection signal transmitted from the thermistor 345 include a signal indicating that it is detected that the temperature of the single battery 100 is equal to or more than a predetermined temperature. Examples of the detection signal transmitted from each single battery 100 or the battery module 200 include a signal indicating that over-charge, over-discharge, or overcurrent of the single battery 100 is detected. In a case where over-charge or the like is to be detected for each single battery 100, battery voltage may be detected, or a positive electrode potential or a negative electrode potential may be detected. In the latter case, a lithium electrode used as a reference electrode is inserted into each single battery 100.

As the protective circuit 346, a circuit included in a device using the battery pack 300 as a power source (for example, an electronic device, an automobile, or the like) may be used.

As described above, the battery pack 300 includes the external power distribution terminal 350. Therefore, via the external power distribution terminal 350, the battery pack 300 can output a current from the battery module 200 to an external device, and input a current from an external device to the battery module 200. In other words, at the time of using the battery pack 300 as a power source, a current from the battery module 200 is supplied to an external device through the external power distribution terminal 350. In addition, at the time of charging the battery pack 300, a charge current from an external device is supplied to the battery pack 300 through the external power distribution terminal 350. If the battery pack 300 is used as an in-vehicle battery, regenerative energy of power of the vehicle can be used as a charge current from an external device.

The battery pack 300 may include a plurality of battery modules 200. In this case, the battery modules 200 may be connected in series, may be connected in parallel, or may be connected in combination of series connection and parallel connection. The printed wiring board 34 and the wiring lines 35 may be omitted. In this case, the positive electrode lead 22 and the negative electrode lead 23 may be used as the positive side terminal 352 and the negative side terminal 353 of the external power distribution terminal 350, respectively.

Such a battery pack is used for, for example, uses requiring excellent cycle performance in a case where a large current is taken out. Specifically, the battery pack is used as, for example, a power source of an electronic device, a stationary battery, and an in-vehicle battery of various vehicles. Examples of the electronic device include a digital camera. The battery pack is particularly suitably used as an in-vehicle battery.

The battery pack according to the fourth approach includes the secondary battery according to the second approach, or the battery module according to the third approach. Accordingly, such battery pack has high energy density and suppressed gas generation, and excels in charge-discharge rate performance and charge-and-discharge cycle life performance.

### (Fifth Approach)

According to a fifth approach, a vehicle is provided. This vehicle includes the battery pack according to the fourth approach.

In the vehicle, the battery pack recovers regenerative energy of power of the vehicle, for example. The vehicle may include a mechanism (regenerator) that is configured to convert kinetic energy of the vehicle into regenerative energy.

Examples of the vehicle include a two-wheel to four-wheel hybrid electric vehicle, a two-wheel to four-wheel electric vehicle, an assist bicycle, and a railway vehicle.

The mounting position of the battery pack in the vehicle is not particularly limited. For example, in a case where the battery pack is mounted on an automobile, the battery pack can be mounted in an engine room of the vehicle, in a rear portion of the car body, or under a seat.

The vehicle may be mounted with a plurality of battery packs. In this case, the batteries included in the battery packs may be electrically connected in series, may be electrically connected in parallel, or may be electrically connected in combination of series connection and parallel connection. For example, in a case where each battery pack includes a battery module, the battery modules may be electrically connected in series, may be electrically connected in parallel, or may be electrically connected in combination of series connection and parallel connection. Alternatively, in a case where each battery pack includes a single battery, the batteries may be electrically connected in series, may be electrically connected in parallel, or may be electrically connected in combination of series connection and parallel connection.

Next, an example of the vehicle according to the approach is described with reference to the drawing.

FIG. 10 is a partially transparent view schematically showing an example of a vehicle.

A vehicle 400 shown in FIG. 10 includes a vehicle main body 40 and the battery pack 300 according to the fifth approach. In the example shown in FIG. 10, the vehicle 400 is a four-wheeled automobile.

This vehicle 400 may be mounted with the plurality of battery packs 300. In this case, the batteries included by the battery pack 300 (for example, single batteries or battery modules) may be connected in series, may be connected in parallel, or may be connected in combination of series connection and parallel connection.

FIG. 10 shows an example in which the battery pack 300 is mounted in an engine room located in a front portion of the vehicle main body 40. As described above, the battery pack 300 may be mounted, for example, in a rear portion of the vehicle main body 40 or under a seat. The battery pack 300 can be used as a power source of the vehicle 400. In addition, the battery pack 300 can recover regenerative energy of power of the vehicle 400.

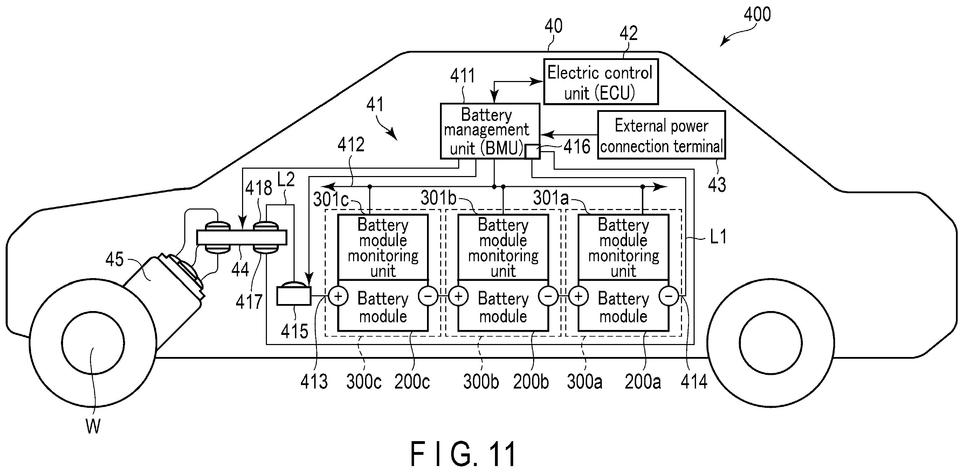

Next, an implementation aspect of the vehicle according to the approach is described with reference to FIG. 11.

FIG. 11 is a diagram schematically showing an example of a control system related to an electrical system in a vehicle. A vehicle 400 shown in FIG. 11 is an electric vehicle.

The vehicle 400 shown in FIG. 11 includes a vehicle main body 40, a vehicle power source 41, a vehicle ECU (electric control unit) 42, which is a high-ranking control device of the vehicle power source 41, an external terminal (a terminal for connection to an external power source) 43, an inverter 44, and a drive motor 45.

In the vehicle 400, the vehicle power source 41 is mounted, for example, in an engine room, in a rear portion of the car body of the automobile, or under a seat. In the vehicle 400 shown in FIG. 11, the mounting place of the vehicle power source 41 is schematically shown.

The vehicle power source 41 includes a plurality of (for example, three) battery packs 300a, 300b, and 300c, a battery management unit (BMU) 411, and a communication bus 412.

The battery pack 300a includes a battery module 200a and a voltage temperature monitoring (VTM) device 301a. The battery pack 300b includes a battery module 200b and a voltage temperature monitoring device 301b. The battery pack 300c includes a battery module 200c and a voltage temperature monitoring device 301c. Each of the battery packs 300a to 300c is a battery pack similar to the battery pack 300 described above, and each of the battery modules 200a to 200c is a battery module similar to the battery module 200 described above. The battery modules 200a to 200c are electrically connected in series. Each of the battery packs 300a, 300b, and 300c can be independently detached, and can be replaced with another battery pack 300.

Each of the battery modules 200a to 200c includes a plurality of single batteries connected in series. At least one of the single batteries is the secondary battery according to the fourth approach. Each of the battery modules 200a to 200c is charged and discharged through a positive electrode terminal 413 and a negative electrode terminal 414.

The battery management unit 411 communicates with the voltage temperature monitoring devices 301a to 301c, and collects information regarding voltage, temperature, etc. for each of the single batteries 100 included in the battery modules 200a to 200c included in the vehicle power source 41. Thereby, the battery management unit 411 collects information regarding maintenance of the vehicle power source 41.

The battery management unit 411 and the voltage temperature monitoring devices 301a to 301c are connected via the communication bus 412. In the communication bus 412, a set of communication lines is shared by a plurality of nodes (the battery management unit 411 and one or more of the voltage temperature monitoring devices 301a to 301c). The communication bus 412 is a communication bus configured based on, for example, a CAN (Control Area Network) standard.

The voltage temperature monitoring devices 301a to 301c measure the voltages and temperatures of the individual single batteries included in the battery modules 200a to 200c, respectively, based on a command communicated from the battery management unit 411. However, temperature may be measured simply at several places per battery module, and it is not necessary to measure the temperatures of all the single batteries.

The vehicle power source 41 may also include an electromagnetic contactor (for example, a switch device 415 shown in FIG. 11) that switches the presence or absence of electrical connection between the positive electrode terminal 413 and the negative electrode terminal 414. The switch device 415 includes a precharge switch (not illustrated) that is turned on at the time of the battery modules 200a to 200c being charged, and a main switch (not illustrated) that is turned on at the time of outputs from the battery modules 200a to 200c being supplied to a load. Each of the precharge switch and the main switch includes a relay circuit (not illustrated) that is switched on or off by a signal supplied to a coil placed near the switch element. The electromagnetic contactor such as the switch device 415 is controlled based on a control signal from the battery management unit 411 or the vehicle ECU 42 that controls the operation of the entire vehicle 400.

The inverter 44 converts an inputted direct current voltage into a three-phase alternating current (AC) high voltage for driving the motor. Three-phase output terminals of the inverter 44 are connected to respective three-phase input terminals of the drive motor 45. The inverter 44 is controlled based on a control signal from the battery management unit 411 or the vehicle ECU 42 for controlling the operation of the entire vehicle. The output voltage from the inverter 44 is adjusted by controlling the inverter 44.

The drive motor 45 is rotated by power supplied from the inverter 44. The driving force generated by the rotation of the drive motor 45 is, for example, transmitted to an axle and a drive wheel W via a differential gear unit.

Although not illustrated, the vehicle 400 includes a regenerative brake mechanism (regenerator). The regenerative brake mechanism rotates the drive motor 45 upon braking the vehicle 400, and converts kinetic energy into regenerative energy as electric energy. The regenerative energy recovered by the regenerative brake mechanism is inputted to the inverter 44, and converted into a direct current. The converted direct current is inputted to the vehicle power source 41.

One terminal of a connection line L1 is connected to the negative electrode terminal 414 of the vehicle power source 41. The other terminal of the connection line L1 is connected to a negative electrode input terminal 417 of the inverter 44. In the connection line L1, a current detection unit (current detection circuit) 416 in the battery management unit 411 is provided between the negative electrode terminal 414 and the negative electrode input terminal 417.

One terminal of a connection line L2 is connected to the positive electrode terminal 413 of the vehicle power source 41. The other terminal of the connection line L2 is connected to a positive electrode input terminal 418 of the inverter 44. In the connection line L2, a switch device 415 is provided between the positive electrode terminal 413 and the positive electrode input terminal 418.

An external terminal 43 is connected to the battery management unit 411. The external terminal 43 can be connected to, for example, an external power source.

In response to an operation input by a driver or the like, the vehicle ECU 42 cooperatively controls the vehicle power source 41, the switch device 415, the inverter 44, etc. together with other management units and control devices including the battery management unit 411. By cooperative control of the vehicle ECU 42, etc., output of power from the vehicle power source 41, charging of the vehicle power source 41, and the like are controlled, and the entire vehicle 400 is managed. Between the battery management unit 411 and the vehicle ECU 42, data related to maintenance of the vehicle power source 41, such as the remaining capacity of the vehicle power source 41, is transferred via a communication line.

The vehicle according to the fifth approach has the battery pack according to the fourth approach mounted thereon. Therefore, a high-performance vehicle may be provided.

### Examples

Examples will now be described. The present invention is, however, not limited to the Examples described below, as long as the gist of the present invention is not exceeded.

### (Example 1)

In Example 1, a nonaqueous electrolyte battery was manufactured by the following procedures.

### <Manufacture of Negative Electrode>

As a negative electrode active material, particles of monoclinic titanium-niobium composite oxide represented by TiNb₂O₇ was prepared. Carbon nanotube (CNT) and acetylene black (AB) as conductive agents, and carboxymethyl cellulose (CMC) and styrene-butadiene rubber (SBR) as binders, were prepared. These materials were mixed in pure water so as to adjust a weight ratio of negative electrode active material:AB:CNT:CMC:SBR to 96.2:0.5:0.3:2:1, to obtain a slurry. Amount of blending (parts by weight) of the fibrous carbon material, amount of blending (parts by weight) of the granular carbon material, and total carbon weight summing these amounts, all per 100 parts by weight of the negative electrode active material, are described in Table 1.

The slurry was applied to both main surfaces on the front and back of a current collector formed of an aluminum foil having a thickness of 15 µm, and the coated film was dried. Drying conditions in this process include 70°C and a residence time of 1 min. A stack that includes the current collector, and the negative electrode active material-containing layers formed on both surfaces of the current collector, was thus obtained. Amount of coating, per one side, of the negative electrode active material-containing layer was set to 100 g/m², while adjusting the amount of coating reduced at both ends of the coated surface. Next, the obtained stack was subjected to roll pressing, while adjusting the density of the negative electrode active material-containing layer to 2.7 g/cm³.

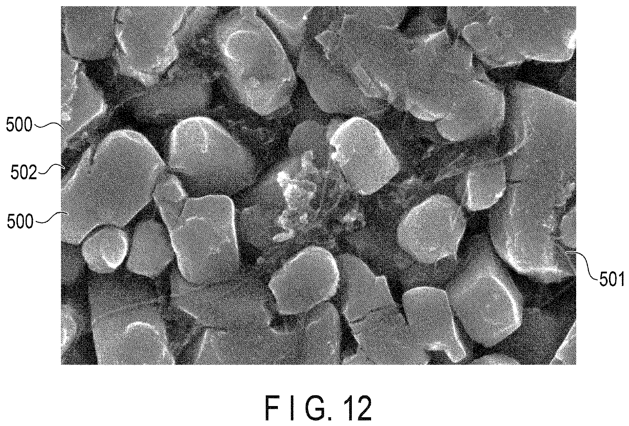

The thus obtained negative electrode was observed under a SEM. A representative SEM image is shown in FIG. 12. The SEM image shown in FIG. 12 is an image before binarization. As shown in FIG. 12, a fibrous carbon material 501 or a granular carbon material 502 exists around particles of a negative electrode active material 500. From SEM observation, it was confirmed that CNT having the first portion with a fiber diameter W1 of 100 to 200 nm, and the second portion with a fiber diameter W2 of 3 to 10 nm is present as the fibrous carbon material, and that the granular carbon material has a particle size of 11 nm. Average primary particle size of the active material was found to be 1.1 µm. Next, this negative electrode was punched out, and then dried in vacuo. The lightness L* of the obtained negative electrode is described in Table 1.

### <Manufacture of Positive Electrode>

As a positive electrode active material, particles of lithium-nickel-cobalt-manganese composite oxide represented by LiNi_{0.5}Co_{0.2}Mn_{0.3}O₂ was prepared. Also acetylene black (AB) as the conductive agent, and polyvinylidene fluoride (PVdF) as the binder were prepared. These materials were mixed so as to adjust a weight ratio of positive electrode active material:AB:PVdF to 90:5:5, to obtain a mixture. Next, the obtained mixture was dispersed in n-methylpyrrolidone (NMP) solvent, to prepare a positive electrode slurry. The slurry was applied to both main surfaces on the front and back of the current collector formed of a 15 µm thick aluminum foil, and the coated film was allowed to dry. A stack that includes the current collector, and the positive electrode active material-containing layers formed on both surfaces of the current collector, was thus obtained. Amount of coating, per surface, of the positive electrode active material-containing layer was controlled with a target amount of 125 g/m², while reducing the amount of coating at both ends of the coated surface. Next, the obtained stack was subjected to roll pressing, while adjusting the density of the positive electrode active material-containing layer, at the center of the coating width, to 3.05 g/cm³. Next, the thus obtained positive electrode was punched out, and then dried in vacuo.

### <Manufacture of Electrode Group>

A 15 µm thick polyethylene (PE) separator was prepared. The separator was accordion-folded, and was stacked with the negative electrode and the positive electrode, in the order such as negative electrode, the separator, the positive electrode, and the separator. The positive electrode and the negative electrode were opposed in a size 50 mm long and 50 mm wide. A stack was obtained with use of five sheets of positive electrode and six sheets of negative electrode. Each of the positive electrode and the negative electrode had an uncoated portion having no electrode layer (active material-containing layer) coated thereon. The uncoated portions of the positive electrode and the negative electrode were located at the short sides of the electrode. The positive electrode and the negative electrode were stacked while placing the separator in between, so as to locate the uncoated portions of the positive electrode and the negative electrode at the opposite sides of the stack. The stack was pressed at room temperature (25°C) under a load of 80 kN for one minute. An electrode group was thus manufactured.

### <Preparation of Nonaqueous Electrolyte>

A nonaqueous electrolyte was prepared by the procedures below. First, propylene carbonate (PC) and diethyl carbonate (DEC) were mixed at a volume ratio PC:DEC of 1:2, to obtain a mixed solvent. To the mixed solvent, lithium hexafluorophosphate LiPF₆ was dissolved at a concentration of 1 M, to obtain a liquid nonaqueous electrolyte.

### <Assembly of Battery>

The electrode group was housed in a pack formed of a laminate film, and subjected to vacuum drying at 80°C for 10 hours. For the laminate film, used was a laminate film having a total thickness of 0.1 mm, in which polypropylene layers were formed on both surfaces of a 40 µm thick aluminum foil. The electrolytic solution was injected. After the injection, the laminate film was heat-sealed under reduced pressure, to manufacture a battery.

### (Examples 2 to 10)

A negative electrode was manufactured according to the same procedures as in Example 1, except that the composition of the negative electrode active material, the average primary particle size of the negative electrode active material, the fiber diameter W1 in the first portion of the fibrous carbon material, the fiber diameter W2 in the second portion, the particle size of the granular carbon material, the amount of blending (parts by weight) of the fibrous carbon material per 100 parts by weight of the negative electrode active material, the amount of blending (parts by weight) of the granular carbon material per 100 parts by weight of the negative electrode active material, the total amount of blending (total carbon weight) of the fibrous carbon material and the granular carbon material, and the lightness L* were set as described in Table 1.

A nonaqueous electrolyte battery was manufactured according to the same procedures as in Example 1 except that the thus obtained negative electrode was used.

### (Example 11)

A nonaqueous electrolyte battery was manufactured according to the same procedures as in Example 1, except that the negative electrode described below was used.

As the fibrous carbon material, a carbon nanotube solely formed of the second portion, without having the first portion, was prepared. The granular carbon material was not used. A slurry was obtained by mixing in pure water, while adjusting a weight ratio of negative electrode active material:CNT:CMC:SBR to 96.6:0.4:1:2. Amount of blending (parts by weight) of the fibrous carbon material, and total carbon weight, both per 100 parts by weight of the negative electrode active material, are described in Table 1.

The slurry was applied to both main surfaces on the front and back of a current collector formed of an aluminum foil having a thickness of 15 µm, and the coated film was dried. Drying conditions in this process include 70°C and a residence time of 1 min. A stack that includes the current collector, and the negative electrode active material-containing layers formed on both surfaces of the current collector, was thus obtained. Amount of coating, per one side, of the negative electrode active material-containing layer was set to 100 g/m², while adjusting the amount of coating reduced at both ends of the coated surface. Next, the obtained stack was subjected to roll pressing, while adjusting the density of the negative electrode active material-containing layer to 2.7 g/cm³. From SEM observation of the obtained negative electrode, it was confirmed that CNT having the second portion, with a fiber diameter W2 whose value is shown in Table 1, is present as the fibrous carbon material. The average primary particle size of the active material was as described in Table 1. Next, this negative electrode was punched out, and then dried in vacuo. The lightness L* of the obtained negative electrode is described in Table 1.

### (Example 12)

As the fibrous carbon material, a carbon nanotube solely formed of the first portion without having the second portion, was prepared. A negative electrode was manufactured by the same procedures as in Example 1, except that the carbon nanotube was used. A nonaqueous electrolyte battery was manufactured according to the same procedures as in Example 1, except that the negative electrode thus manufactured was used.

### (Comparative Example 1)

A slurry was obtained by mixing in pure water, while adjusting negative electrode active material:AB:CNT:CMC:SBR to 95:1:1:1:2. Amount of blending (parts by weight) of the fibrous carbon material, and total carbon weight, both per 100 parts by weight of the negative electrode active material, and L* are described in Table 1. The negative electrode was manufactured according to the same procedures as in Example 1, except following the settings described in Table 1, to manufacture a nonaqueous electrolyte battery.

### (Comparative Example 2)

A slurry was obtained by mixing in pure water, while adjusting negative electrode active material:CNT:CMC:SBR to 96.99:0.01:1:2. Amount of blending (parts by weight) of the fibrous carbon material, and total carbon weight, both per 100 parts by weight of the negative electrode active material, and L* are described in Table 1. The negative electrode was manufactured according to the same procedures as in Example 1, except following the settings described in Table 1, to manufacture a nonaqueous electrolyte battery.

### (Comparative Example 3)

A slurry was obtained by mixing in pure water, while adjusting negative electrode active material:AB:CNT:CMC:SBR to 94:2:1:1:2. Amount of blending (parts by weight) of the fibrous carbon material, and total carbon weight, both per 100 parts by weight of the negative electrode active material, and L* are described in Table 1. The negative electrode was manufactured according to the same procedures as in Example 1, except following the settings described in Table 1, to manufacture a nonaqueous electrolyte battery.

Table 1 shows the composition of the negative electrode active material, the average primary particle size of the negative electrode active material, the fiber diameter W1 in the first portion of the fibrous carbon material, the fiber diameter W2 in the second portion of the fibrous carbon material, the particle size of the granular carbon material, the amount of blending (parts by weight) of the fibrous carbon material per 100 parts by weight of the negative electrode active material, the amount of blending (parts by weight) of the granular carbon material per 100 parts by weight of the negative electrode active material, the total amount of blending (total carbon weight) of the fibrous carbon material and the granular carbon material, and the lightness L*, for the individual Examples and Comparative Examples. All of the monoclinic titanium-niobium composite oxide having the composition represented by TiNb₂O₇, the niobium oxide having the composition represented by Nb₂O₅, and the monoclinic titanium oxide having the composition represented by TiO₂ used in Examples were white particles.

### <Evaluation>

Each of the batteries in Examples and Comparative Examples was allowed to discharge individually at 0.2C and 5C, to determine ratio of 5C discharge capacity relative to 0.2C discharge capacity, as an index of the rate performance. Test results are shown in Table 2 below.

The individual batteries of Examples and Comparative Examples were allowed to stand still at 100% SOC (3 V vs Li/Li⁺), 80°C for 10 days, the cell volume was measured by the Archimedes method before and after the standing, and the amount of gas generation was estimated from the difference. The amount of gas generation (cc/Ah) is described in Table 2.

Each of the batteries in Examples and Comparative Examples was subjected to charge-discharge test at 25°C, at a rate of 3C repeated 1000 cycles, wherein, retention rate (%) of the discharge capacity at the 1000-th cycle to the discharge capacity at the first cycle was defined as the cycle performance. Results are shown in Table 2.

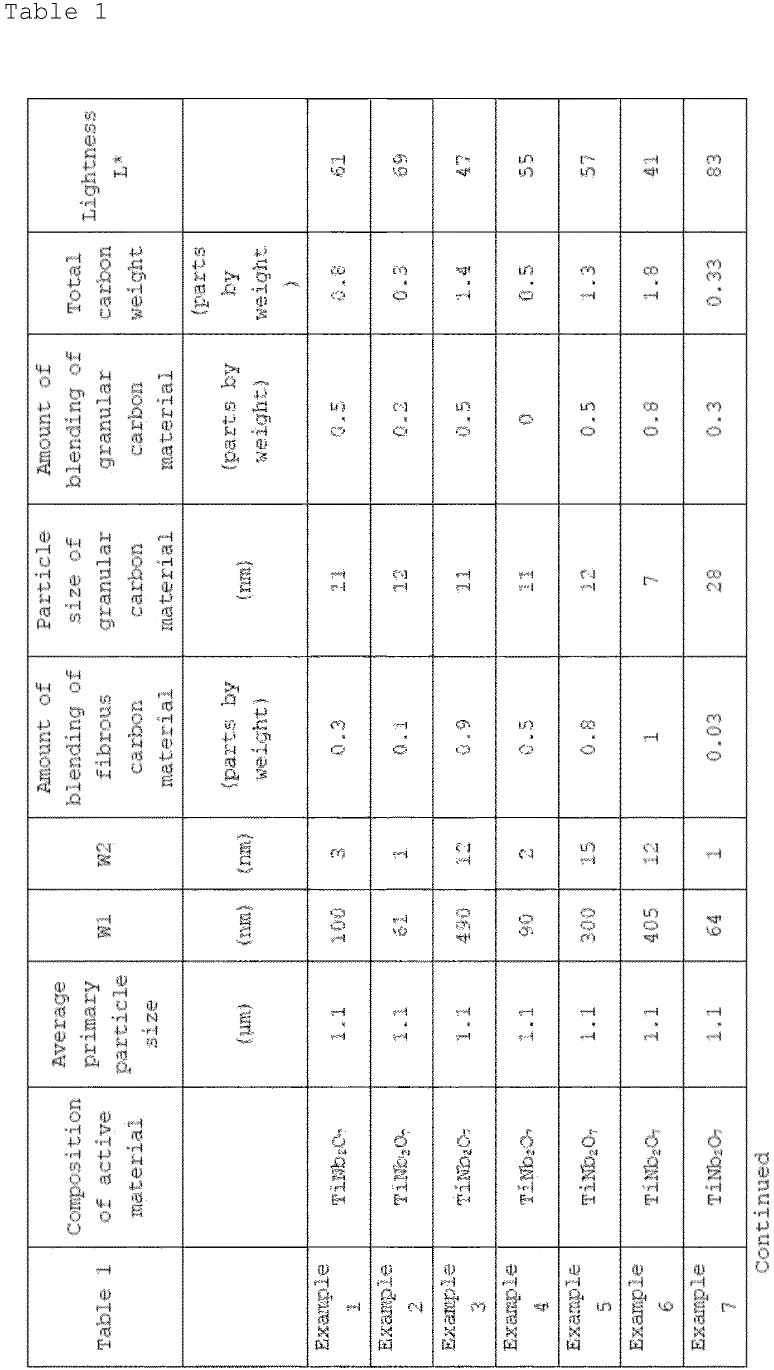

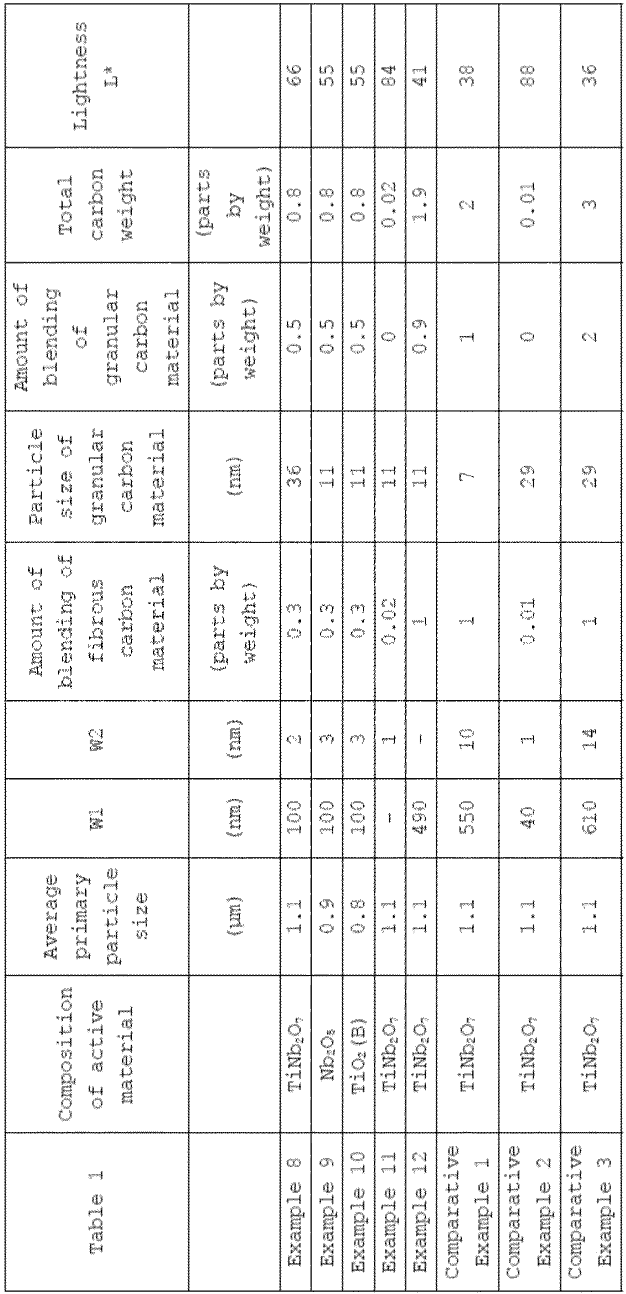

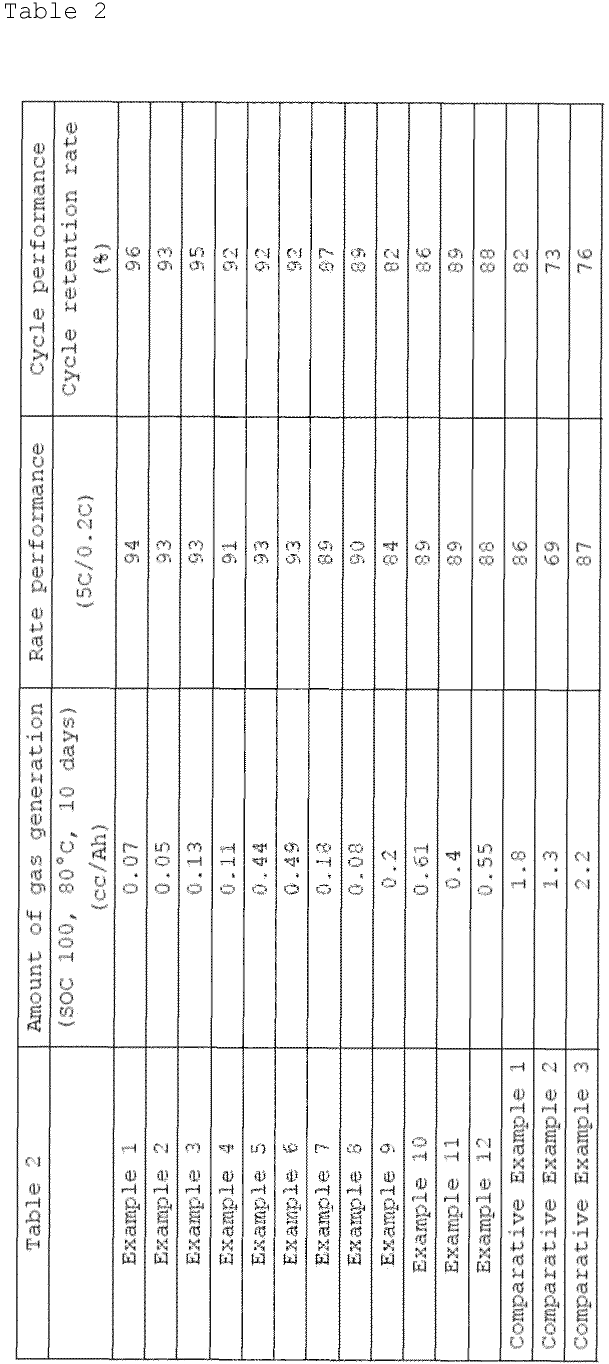

As described in Table 2, the nonaqueous electrolyte batteries in Examples 1 to 12 were found to demonstrate less gas generation during storage at high temperatures, as compared with the nonaqueous electrolyte batteries in Comparative Examples 1 to 3, while maintaining the rate performance and the cycle performance. In Comparative Example 1, the lightness L* fell below 40, since the fiber diameter in the first portion was larger than 500 nm. In Comparative Example 2, the lightness L* exceeded 85, since the fiber diameter in the first portion fell below 60 nm, and the total carbon weight was small. In Comparative Example 3, the lightness L* fell below 40, since the fiber diameter in the first portion was larger than 500 nm, and the total carbon weight was large.

From comparison among Examples 1, 9, and 10, it was understood that Example 1 with use of niobium titanium-containing oxide as the active material is superior to Examples 9 and 10, in terms of the amount of gas generation, rate performance, and cycle performance.

From comparison among Examples 1, 11, and 12, it was understood that Example 1 with use of the fibrous carbon material having the first portion with a fiber diameter of from 60 nm to 500 nm, and the second portion with a fiber diameter of from 1 nm to 15 nm, is superior to Examples 11 and 12 in terms of the amount of gas generation, rate performance, and cycle performance.

From comparison between Example 1 and Example 8, it was understood that Example 1 with use of the granular carbon material with a particle size of 30 nm or smaller is superior to Example 8, in terms of rate performance and cycle performance.

According to one or more approaches and Examples described above, the electrode is provided. Such electrode includes 2.5 parts by weight or less of carbon, per 100 parts by weight of the active material. The lightness L* of the electrode satisfies 40 ≤ L* ≤ 85. Accordingly, it is possible to provide the electrode that can materialize a secondary battery with high energy density, suppressed gas generation, excellent charge-discharge rate performance and charge-and-discharge cycle life performance.

The present disclosure also encompasses the following approaches of an electrode, a secondary battery, a battery pack, and a vehicle:
{1}. An electrode comprising an active material that comprises a metal oxide, and a conductive agent that contains a carbon material,
   a weight of carbon contained in the electrode being 2.5 parts by weight or less, per 100 parts by weight of the active material, and
   the electrode having lightness L* that satisfies 40 ≤ L* ≤ 85.
{2}. The electrode according to clause {1}, wherein the carbon material in the conductive agent comprises a fibrous carbon material having a first portion with a fiber diameter of 60 nm to 500 nm, and a second portion with a fiber diameter of 1 nm to 15 nm.
{3}. The electrode according to clause {2}, wherein the fibrous carbon material comprises at least one selected from a group consisting of carbon nanotube, vapor grown carbon fiber, and carbon nanofiber.
{4}. The electrode according to clause {2}, wherein the carbon material in the conductive agent further comprises a granular carbon material with a particle size of 30 nm or smaller.
{5}. The electrode according to clause {4}, wherein the granular carbon material comprises at least one selected from a group consisting of carbon black, graphite, Ketjen black and coke.
{6}. The electrode according to any one of clauses {1} to {5}, wherein the metal oxide is a white particulate matter.
{7}. The electrode according to any one of clauses {1} to {6}, wherein the metal oxide has an average primary particle size of 0.4 µm to 1.5 µm.
{8}. The electrode according to any one of clauses {1} to {7}, wherein the metal oxide comprises at least one of a titanium-containing oxide or a niobium-containing oxide.
{9}. The electrode according to any one of clauses {1} to {8}, wherein the metal oxide comprises at least one selected from a group consisting of titanium oxide having a monoclinic structure, titanium oxide having a rutile structure, titanium oxide having an anatase structure, an orthorhombic titanium-containing oxide having an orthorhombic structure, niobium pentoxide, and niobium titanium-containing oxide.
{10}. The electrode according to any one of clauses {1} to {9}, wherein the metal oxide comprises a monoclinic niobium titanium-containing oxide.
{11}. A secondary battery comprising:
   a positive electrode;
   a negative electrode; and
   an electrolyte,
   at least one of the positive electrode or the negative electrode being the electrode according to any one of clauses {1} to {10}.
{12}. A battery pack comprising at least one secondary battery according to clause {11}.
{13}. The battery pack according to clause {12}, further comprising:
   an external power distribution terminal; and
   a protective circuit.
{14}. The battery pack according to clause {12} or {13}, comprising a plurality of the at least one secondary battery,
   the secondary batteries being electrically connected in series, in parallel, or in a combination of series connection and parallel connection.
{15}. A vehicle comprising the battery pack according to any one of clauses {12} to {14}
{16}. The vehicle according to clause {15}, comprising a mechanism configured to convert kinetic energy of the vehicle into regenerative energy.

While certain approaches have been described, these approaches have been presented by way of example only, and are not intended to limit the scope of the inventions. Indeed, the novel approaches described herein may be embodied in a variety of other forms; furthermore, various omissions, substitutions, and changes in the form of the approaches described herein may be made without departing from the spirit of the inventions. The accompanying claims and their equivalents are intended to cover such forms or modifications as would fall within the scope and spirit of the inventions.

## Claims

1. An electrode (10) comprising an active material that comprises a metal oxide, and a conductive agent that contains a carbon material,
a weight of carbon contained in the electrode (10) being 2.5 parts by weight or less, per 100 parts by weight of the active material, and
the electrode (10) having lightness L* that satisfies 40 ≤ L* ≤ 85.

2. The electrode (10) according to claim 1, wherein the carbon material in the conductive agent comprises a fibrous carbon material having a first portion with a fiber diameter of 60 nm to 500 nm, and a second portion with a fiber diameter of 1 nm to 15 nm.

3. The electrode (10) according to claim 2, wherein the fibrous carbon material comprises at least one selected from a group consisting of carbon nanotube, vapor grown carbon fiber, and carbon nanofiber.

4. The electrode (10) according to claim 2, wherein the carbon material in the conductive agent further comprises a granular carbon material with a particle size of 30 nm or smaller.

5. The electrode (10) according to claim 4, wherein the granular carbon material comprises at least one selected from a group consisting of carbon black, graphite, Ketjen black and coke.

6. The electrode (10) according to any one of claims 1 to 5, wherein the metal oxide is a white particulate matter.

7. The electrode (10) according to any one of claims 1 to 6, wherein the metal oxide has an average primary particle size of 0.4 µm to 1.5 µm.

8. The electrode (10) according to any one of claims 1 to 7, wherein the metal oxide comprises at least one of a titanium-containing oxide or a niobium-containing oxide.

9. The electrode (10) according to any one of claims 1 to 7, wherein the metal oxide comprises at least one selected from a group consisting of titanium oxide having a monoclinic structure, titanium oxide having a rutile structure, titanium oxide having an anatase structure, an orthorhombic titanium-containing oxide having an orthorhombic structure, niobium pentoxide, and niobium titanium-containing oxide.

10. The electrode (10) according to any one of claims 1 to 7, wherein the metal oxide comprises a monoclinic niobium titanium-containing oxide.

11. A secondary battery (100) comprising:
a positive electrode (5);
a negative electrode (3); and
an electrolyte,
at least one of the positive electrode (5) or the negative electrode (3) being the electrode (10) according to any one of claims 1 to 10.

12. A battery pack (300) comprising at least one secondary battery (100) according to claim 11.

13. The battery pack (300) according to claim 12, further comprising:
an external power distribution terminal (350); and
a protective circuit (346).

14. A vehicle (400) comprising the battery pack (100) according to any one of claims 12 to 13.

15. The vehicle (400) according to claim 14, comprising a mechanism configured to convert kinetic energy of the vehicle into regenerative energy.
